# EUROPEAN PATENT SPECIFICATION

(11) **EP 3 692 784 B1**
(45) Date of publication and mention of the grant of the patent: **18.01.2023**
(21) Application number: 18865306.7
(22) Date of filing: 28.09.2018
(51) Int. Cl.: A01G 31/00, A01G 7/02, A01G 9/14, A01G 9/24, A01G 25/16, A01G 31/06

(54) **PLANT CULTIVATION APPARATUS**
PFLANZENZUCHTVORRICHTUNG
APPAREIL DE CULTURE DE PLANTES

(30) Priority: 02.10.2017 JP 2017192410
(43) Date of publication of application: 12.08.2020
(73) Proprietor: H. Ikeuchi & Co., Ltd., Osaka-shi, Osaka 550-0011 (JP)
(72) Inventor: IKEUCHI, Hiroshi, Osaka-shi, Osaka 550-0011 (JP); YONEDA, Kazuhiro, Osaka-shi, Osaka 550-0011 (JP); KATAOKA, Daisuke, Osaka-shi, Osaka 550-0011 (JP); HIKOSAKA, Yousuke, Osaka-shi, Osaka 550-0011 (JP); KOTANI, Harufumi, Osaka-shi, Osaka 550-0011 (JP); TAKEMOTO, Masataka, Osaka-shi, Osaka 550-0011 (JP)
(74) Representative: Vossius & Partner Patentanwälte Rechtsanwälte mbB
(86) International application number: PCT/JP2018/036421
(87) International publication number: WO 2019/069826

(56) References cited:
- EP-A2- 0 124 912
- WO-A1-2011/021716
- WO-A1-2011/043326
- WO-A1-2013/136459
- AU-B3- 643 421
- CN-A- 105 850 681
- IT-A1- FI20 130 002
- JP-A- H0 646 696
- JP-A- 2005 052 754
- JP-A- 2006 067 999
- JP-A- 2012 223 127
- JP-A- 2016 178 891
- JP-U- H0 553 457
- US-A1- 2012 279 126
- US-B1- 6 219 966
- US-B1- 6 219 966

## Description

### TECHNICAL FIELD

The present invention relates to a plant cultivation apparatus, and particularly relates to a plant cultivation apparatus for conducting fog cultivation in which nutrient solution is sprayed from a nozzle toward a root of a cultivation plant in a greenhouse such as a vinyl house, wherein the nutrient solution sprayed in an enclosed space in which the root of the plant is present (hereinafter referred to as "rhizosphere") can be efficiently absorbed by the roots, surplus nutrient solution is reduced and can be promptly discharged even when it generates, and cultivating the cultivation plants at high density, increasing the yield and improving the quality of cultivation plants can be realized, that leads to economic farming.

### BACKGROUND ART

Recently, hydroponic cultivation, in which crops are cultivated without using soil, has attracted attention. The advantages thereof are that: soil diseases and continuous cropping obstacles are avoided; works required for soil cultivation such as plowing, ridging, earthing up, fertilizing and weeding can be omitted; liquid supply and fertilizing management can be automated; scaling up is facilitated; and efficiency of use of fertilizer and water is improved. Among the hydroponic cultivation, "aerial cultivation", in which a nutrient solution is sprayed toward rhizosphere of a cultivation plant and filled in a mist state, makes it possible to realize a high absorption rate of the nutrient solution to accelerate the growth. In particular, there is an advantage that quality of the cultivation plant can be enhanced by controlling the sprayed nutrient solution to be absorbed by roots of the plant at will, and automation and labor saving can be easily performed.

As a plant cultivation apparatus with spraying, it can be seen in Japanese Patent No. 5792888 (Patent Literature 1), Japanese Unexamined Patent Application Publication No. 2012-10651 (Patent Literature 2), WO 2015/174493 (Patent Literature 3) and others.

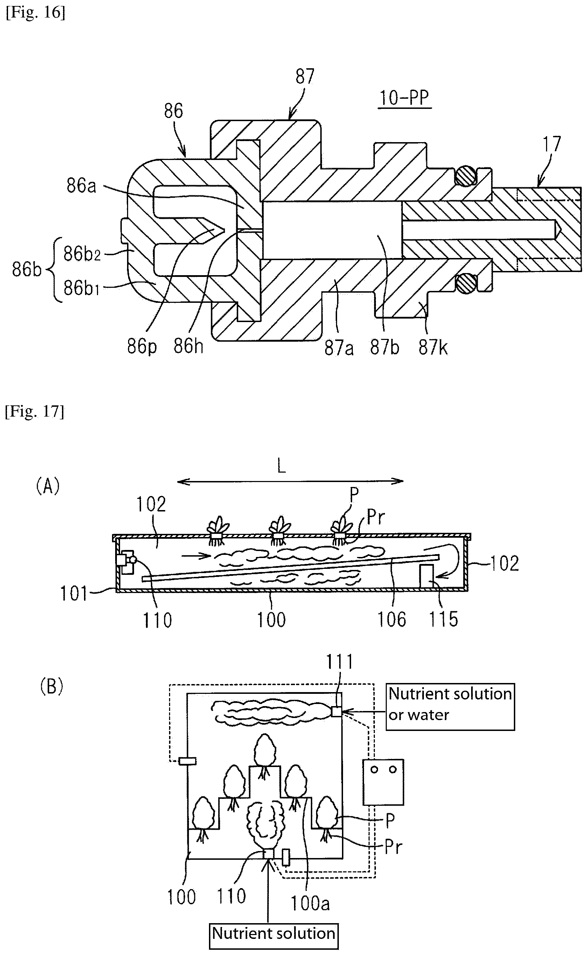

In the plant cultivation apparatuses disclosed in Patent Literatures 1 and 2, as shown in Fig. 17(A), cultivation plants P are planted on an upper surface of a horizontally long cultivation box 100 along a length direction L at intervals, and roots Pr of these cultivation plants P are hung in the cultivation box 100. In the cultivation box 100, an inclined partition plate 106 which partitions an upper part and a lower part along the length direction L is provided, one nozzle 110 is attached to a center of an inner surface of one side wall 101 on the short side, and a fan 115 for spray circulation is provided at a lower part near the opposed other side wall 102. By using the nozzle 110 and the fan 115, spray of the nutrient solution from the nozzle 110 flows above the inclined partition plate 106 to the other side wall 102, flows downward along the other side wall 102, and then flows under the inclined partition plate 106 to the one side wall 101, thereby being circulated in the cultivation box 100. In Patent Literature 2, as shown in Fig. 17(B), an upper surface 100a of the cultivation box 100 is stepped, cultivation plants P are planted on each step, and the nutrient solution is sprayed from a nozzle 110 toward roots Pr, as well as water and nutrient solution are sprayed from a nozzle 111 toward stems and leaves of the above-ground part of the cultivation plant P.

In Patent Literature 3, as shown in Figs. 18(A), (B), and (C), nozzles 110 are disposed on the inner surface of side walls in the length direction L at intervals in the cultivation box 100, and nutrient solution is sprayed from these nozzles toward roots Pr inside the box. That is, in Patent Literatures 1 and 2, the nutrient solution is sprayed in the length direction from one nozzle attached to one end in the length direction L, whereas in Patent Literature 3, the nutrient solution is sprayed in the orthogonal width direction W from the plurality of nozzles 110 disposed at intervals in the length direction.

Patent Literature 4 describes a tubular container for hydroponic culture. Patent Literature 5 describes a cultivation technique without soil. Patent Literature 6 describes an aeroponics channel and an aeroponic cultivation system. Patent Literature 7 describes apparatus for growing plants aeroponically.

### CITATION LIST

### PATENT LITERATURE

PATENT LITERATURE 1
   Japanese Patent No. 5792888
PATENT LITERATURE 2
   Japanese Unexamined Patent Application Publication No. 2012-10651
PATENT LITERATURE 3
   WO 2015/174493
PATENT LITERATURE 4
   US 6 219 966 B1
PATENT LITERATURE 5
   CN 105 850 681 A
PATENT LITERATURE 6
   IT FI20 130 002 A1
PATENT LITERATURE 7
   AU 643 421 B3

### SUMMARY OF INVENTION

### TECHNICAL PROBLEM

In the conventional plant cultivation apparatuses of Patent Literatures 1 to 3, since the nozzle is installed on the inner surface of the side wall surrounding a hollow portion of the cultivation box, the installation work and maintenance thereof need to be conducted in a state where a cover of the box is opened, and so there is a problem that it takes time and labor.

In addition, in Patent Literatures 1 and 2, since the spray from one nozzle which is installed at one end in the length direction is circulated by the fan which is installed at the other end in that, it is necessary to extend flight distance of the spray. Therefore, a two-fluid nozzle needs to be used as the nozzle. However, use of a two-fluid nozzle requires an air compressor for supplying compressed air, that causes a problem of increase in a facility cost and a running cost. Meanwhile in Patent Literature 3, it is not necessary to extend flight distance of the spray because the nutrient solution is sprayed toward the root of each cultivation plant, a one-fluid nozzle can be used, and a facility cost and a running cost can be reduced.

However, in the case of the cultivation apparatus of Patent Literature 3, directly spraying toward the roots of one or two cultivation plants causes increase in the number of the nozzle and the amount of the spray. Therefore, a large amount of surplus nutrient solution, that is not absorbed by a crop, is generated, and the surplus nutrient solution tends to accumulate in the cultivation box. When the roots of cultivation plants are immersed in this surplus nutrient solution, excessive intake of nutrients occurs, and control of fertilization becomes difficult. In addition, pathogens are generated in the accumulated surplus nutrient solution, and when it infects to the roots of plants, root rot or damage of vascular bundles is liable to occur, and further, once the disease occurs, it is likely to spread rapidly within a short time to completely annihilate the cultivated plants due to a uniform environment.

The present invention has been made in view of the above-described problems, and an object of the present invention is to provide a plant cultivation apparatus that is capable of making a hollow rhizosphere portion a high humidity environment with a small amount of spray, whereby nutrient solution can be efficiently absorbed by roots and surplus nutrient solution can be reduced and quickly discharged, and is capable of easily assembling and maintaining the entire plant cultivation apparatus including installation of a nozzle.

### SOLUTION TO PROBLEM

The present invention is defined in the claims. In order to solve the above problems, the present invention provides a plant cultivation apparatus comprising a cultivation box which has a hollow rhizosphere portion for hanging a root of a cultivation plant and in which nutrient solution is sprayed in a mist state in the rhizosphere portion, wherein: the cultivation box is constructed by detachably combining an upper panel and a lower panel; a bottom wall of the lower panel is provided with a waste liquid port and a trough-shaped gutter is detachably installed below the bottom wall of the lower panel over an entire length in a length direction; the upper panel is provided with nozzle-mounting holes at intervals in the length direction; a nozzle for spraying nutrient solution is inserted into each of the nozzle-mounting holes and hung in the rhizosphere portion; the upper panel is provided with planting holes for the cultivation plant; and a root of the cultivation plant is inserted into the planting hole and hung in the rhizosphere portion, to which the nutrient solution is sprayed from the nozzle.

The upper panel is provided with the nozzle-mounting hole and the planting hole to function as a planting panel and a nozzle mounting panel, and the lower panel functions as the hollow rhizosphere portion for accommodating growing roots and leads the surplus nutrient solution to the gutter. Since the upper panel and the lower panel is provided so as to be separated from each other, the nozzle and the cultivation plant can be mounted on the upper panel after the upper panel is put on the lower panel. In particular, the nozzle can be hung in the rhizosphere portion through the nozzle-mounting hole provided on the upper panel, and therefore, during maintenance, the nozzle can be pulled out from the nozzle-mounting hole without separating the upper panel from the lower panel to perform maintenance, and installation and maintenance of the nozzle can be easily performed.

The cultivation box used in the plant cultivation apparatus of the present invention is constructed by assembling three members of the upper panel, the lower panel and the gutter as essential components. Since the hollow rhizosphere portion is configured such that the upper panel and the lower panel that extend in the longitudinal direction are assembled and both ends thereof in the longitudinal direction are closed, closing panels may be assembled at both ends or the upper panel or the lower panel may be provided with closing panel portions at both ends in the length direction.

In transportation, the lower panel and the upper panel can be transported in a state where the plurality of lower panels are stacked and the plurality of upper panels are stacked, and therefore, the packing volume is reduced and transportability becomes excellent. Further, the cultivation box can be easily assembled simply by mounting the upper panel on the lower panel, and the cultivation box can be reduced in size.

It is preferable that the amount of the nutrient solution sprayed from the nozzle is so that the humidity in the rhizosphere portion is high.

As described above, since the cultivation box can be reduced in size and the volume of the rhizosphere portion can be reduced, inside of the small hollow rhizosphere portion can be efficiently filled with mist with a small spray amount, whereby a high-humidity nutrient solution environment can be created and the nutrient solution can be efficiently absorbed by the roots of the cultivated plant. Therefore, the supply amount of the nutrient solution can be reduced, and as a result, the surplus nutrient solution can be reduced.

It is preferably configured that: the lower panel has inclined side walls on both sides in a width direction, that are formed inclined in an upward spreading direction; the upper panel has inclined side walls on both sides in the width direction, that are formed inclined in a downward spreading direction; the cultivation box is formed into any one of shapes of wide, narrow, shallow and deep by changing a width or height of the lower panel and the upper panel; the nozzle-mounting hole is provided on a top surface between the inclined side walls on both sides of the upper panel; and the planting holes are provided on the inclined side wall in a staggered arrangement.

Alternatively, it may be configured that: the lower panel and the upper panel respectively have vertical side walls on both sides in a width direction; a top surface of the upper panel and a bottom surface of the lower panel are horizontal; the cultivation box is formed into any one of shapes of wide, narrow, shallow and deep by changing a width or height of the lower panel and the upper panel; the one nozzle-mounting hole is provided on the top surface of the narrow upper panel, or the plurality of nozzle-mounting holes are provided at intervals on the top surface of the wide upper panel; and the planting holes are provided at positions sandwiching the nozzle-mounting hole.

The nutrient solution sprayed from the nozzle inside the cultivation box smoothly falls downward to the lower panel and accumulates at the bottom, the accumulated surplus nutrient solution flows into the gutter through the waste liquid port of the bottom wall, and the surplus nutrient solution can be promptly discharged. The waste liquid port may be a waste liquid hole or a waste liquid groove. Therefore, the surplus nutrient solution does not accumulate as a waste liquid inside the lower panel of the cultivation box, and the growing roots of the cultivation plant do not soak in the waste liquid accumulated in the cultivation box, whereby root rot or plant diseases can be prevented. The bottom of the gutter may be inclined downward toward one end in the length direction.

The top surface between the left and right inclined side walls of the upper panel having a substantially mountain shape is continuous in an elongated flat plate shape, the size of the nozzle-mounting hole provided on the top surface at intervals in the length direction is such that the nozzle can be inserted, a cover plate which is larger than the nozzle-mounting hole is attached to the nutrient solution supply pipe that hangs the nozzle at the lower end thereof, and the cover plate is configured so as to engage with a periphery of the nozzle-mounting hole. With this configuration, the nozzle can be attached to and detached from the cultivation box by one-touch operation.

As described above, it is preferable that the plurality of planting holes are provided on the inclined side wall of the upper panel at intervals in the longitudinal direction, the plurality of upper and lower planting holes are provided in a staggered arrangement in the vertical direction, and the planting pot in which the roots of the cultivated plant is placed is inserted into each planting hole and detachably attached thereto. It is preferable that the planting pot is a cylindrical object having an upper opening, and has a shape provided with a porous bottom wall, a peripheral wall and a protruding piece to be held at a peripheral edge of the planting hole along the upper edge of the peripheral wall.

In the case where the cultivation box is installed along a wall of a cultivation room, the upper panel may not have a substantially mountain shape but may have a right triangle shape with one side wall being an inclined side wall and the other side wall being a vertical wall having no planting hole. In this case, the lower panel combined with the upper panel also has a similar right triangle shape.

A receiving plate portion is provided so as to protrude outward from an upper end of each side wall in a width direction of the lower panel, and a fitting portion is provided on the receiving plate portion; a mounting portion is provided so as to protrude outward from a lower end of each side wall in the width direction of the upper panel, and a fitted portion is provided on the mounting portion; and the mounting portion of the upper panel is placed on the receiving plate portion of the lower panel to fit the fitting portion to the fitted portion, or an intermediate panel for increasing volume of the rhizosphere portion is interposed between the side walls of the upper panel and the lower panel on both sides wherein connection plate portions protruding outward at an upper end and a lower end of the intermediate panel are respectively abutted and connected with the mounting portion and the receiving plate portion.

On the connection plate portions at the upper and lower ends of the intermediate panel, a fitting portion that fits the fitted portion provided on the mounting portion of the upper panel and a fitted portion that fits the fitting portion provided on the receiving plate portion of the lower panel are provided.

It is preferable that the fitting portion is a fitting convex portion and the fitted portion is a fitting concave portion, and those are concave-convex fitted.

In the case where there is a need to increase the volume of the rhizosphere portion depending on the plant to be cultivated, heights of the side walls of the upper panel and the lower panel may be increased to make the cultivation box deeper, or the upper panel and the lower panel may be formed widen.

Furthermore, the intermediate panel may be interposed between the upper panel and the lower panel. When the intermediate panel is used in this manner, it becomes possible to change the volume of the rhizosphere portion depending on the amount of root growth of the cultivated plant and cope with the cultivated plant by installing the intermediate panel interposed therebetween and changing the height of the intermediate panel without changing the upper panel and the lower panel.

As a stand for holding the cultivation box, a stand comprising left and right support pipes to which a portion supporting the receiving plate portion of the lower panel is attached, a lower connection pipe which connects the left and right support pipes, and an upper connection pipe which supports the lower surface of the gutter, is preferably adopted.

In the case where the cultivation plant to be planted on the upper panel is a leafy vegetable or the like with a low height, it is possible to cultivate at a high density by installing the plurality of cultivation boxes in upper and lower stages supported by the left and right support pipes. In the case of tall crops such as a tomato, the cultivation box is provided in one stage.

A nutrient solution supply pipe is inserted into the nozzle-mounting hole of the upper panel and hung in the rhizosphere portion; a pipe that branches on both sides in the length direction is provided at a lower end of the nutrient solution supply pipe; the nozzle for spraying forward and the nozzle for spraying rearward are provided at both front and rear ends of the branch pipe; the nozzles are disposed between the plurality of cultivation plants arranged side by side in the length direction; these nozzles are connected to a main nutrient solution supply pipe at intervals; and the main nutrient solution supply pipe is installed and piped on an upper side of the upper panel; whereby installing of the nozzle can be realized by simply inserting the nozzle into the nozzle-mounting hole.

That is, it is preferable that: the nozzle which is inserted into the nozzle-mounting hole of the upper panel and hung in the hollow rhizosphere portion includes a pair of front and rear nozzles of the front-facing nozzle and the rear-facing nozzle, that are attached to the both ends in a front-rear length direction of an inverted T-shaped joint pipe provided at the lower end of the nutrient solution supply pipe; the front-facing nozzle and the rear-facing nozzle are disposed between the plurality of cultivation plants arranged side by side in the length direction, the nutrient solution to be sprayed from these front-rear nozzles in the front-rear direction is supplied to rhizosphere of the cultivation plant in the front-rear direction, and the nutrient solution supply pipe can be connected to the main nutrient solution supply pipe installed above the upper panel.

As described above, by simply inserting the nutrient solution supply pipe having a pair of the front and rear nozzles attached to the ends thereof in the front-rear length direction into the nozzle-mounting hole, the nozzle can be installed in the rhizosphere portion surrounded by the upper panel and the lower panel, and thus, assembling workability can be improved.

Specifically, the nutrient solution supply pipe with a pair of the front and rear nozzles is disposed at a ratio of one to three to ten cultivation plants arranged side by side in the length direction. The number of nozzles is not limited to a pair of front and rear, and the nozzle may be attached only one side.

Specifically, the nutrient solution supply pipe includes a vertical pipe extending downward from a longitudinal center of an upper end pipe extending in the horizontal direction, the upper end pipe is interposed between the main nutrient solution supply pipes to be connected thereto, the cover plate is attached to an upper end of the vertical pipe, the inverted T-shaped joint pipe is connected to a lower end of the vertical pipe, and the forward-facing nozzle and the rearward-facing nozzle are connected to the respective ends of the branch pipe extending in the front-rear length direction at a lower part of the joint pipe by one-touch operation of simply inserting and rotating.

Each of the forward-facing nozzle and the rearward-facing nozzle has a structure such that a strainer is integrally mounted on an upstream side of the nozzle, and the nutrient solution flowing into the strainer from the main nutrient solution supply pipe via the nutrient solution supply pipe and the branch pipe of the joint pipe is subjected to removal of foreign matter by the strainer, then flows into the nozzle and is sprayed. The nutrient solution supply pipes are arranged at intervals in the length direction in the rhizosphere portion of the cultivation box, and by spraying the nutrient solution forward from the forward-facing nozzle and rearward from the rearward-facing nozzle at the lower end of each of the nutrient supply pipe, the entire rhizosphere portion is almost uniformly filled with mist of the nutrient solution.

As described above, in the present invention, since the plurality of nozzles for spraying the nutrient solution toward rhizosphere of cultivation plants are arranged at intervals in the cultivation box, it is not necessary to extend the spray distance from each nozzle as compared with the case where the spray from one nozzle is circulated in the box as in the Patent Literature 1, and therefore, a one-fluid nozzle which sprays only the nutrient solution without mixing a compressed air can be used. In this way, when a two-fluid nozzle which requires a compressed air is not used, an air compressor comes to be unnecessary and a fan for circulating the spray in the cultivation box comes to be unnecessary, so that a running cost and a facility cost can be reduced.

Specifically, an average particle diameter of the spray from a one-fluid nozzle which sprays one fluid of the nutrient solution is 10 µm to 100 µm, preferably 10 µm to 50 µm, and more preferably 10 µm to 30 µm that is a semi-dry fog composed of fine mist. When the semi-dry fog is sprayed from the nozzle, it becomes hard to fall as water droplets in the cultivation box, so that an absorption rate of the nutrient solution by roots of the cultivation plant can be increased and waste of the nutrient solution can be eliminated. The particle diameter of the fog is measured by a laser method.

As the one-fluid nozzle for spraying the nutrient solution, it is preferable to use a hollow conical nozzle which sprays a swirling flow or a pin jet nozzle which sprays by impinging a straight rod flow on a pin.

As the hollow conical nozzle, it is preferable to use a nozzle, for example, comprising a nozzle body and a closer, wherein: the nozzle body includes an ejection-side wall through which an ejection hole is provided at a center thereof and an outer peripheral wall; the closer is accommodated in a space surrounded by the ejection-side wall and an inner surface of the outer peripheral wall of the nozzle body; a large-diameter inflow port of the ejection hole of the nozzle body is located at a center part of an inlet-side inner surface of the ejection-side wall or a central part of the ejection-side end surface of the closer; an inner peripheral end of an arc-shaped swirling groove formed on an outer circumference step part surrounding the large-diameter inflow port is opened to the large-diameter inflow port, and an outer end of the swirling groove is opened to a liquid passage provided on an outer circumference of the closer, whereby a swirling flow that has passed through the swirling groove is made to be sprayed from the ejection hole; an orifice is formed at the inner peripheral end of the swirling groove; and the size of a minimum part of the orifice is equal to the size of a minimum diameter part of the ejection hole.

The pin jet nozzle has an ejection hole formed of a straight hole for ejecting a straight rod flow at a center of an ejection-side closing wall of a nozzle body, and an impingement pin, which the straight rod flow impinges on, is provided so as to project from an outer surface of the ejection-side closing wall of the nozzle body at a position facing the ejection hole.

In the pin jet nozzle, a straight rod flow ejected from the ejection hole is made to impinge on the impingement pin, thereby making the spray atomized.

The impingement pin is provided so as to project from a J-shaped or U-shaped impingement frame which protrudes from the ejection-side closing wall of the nozzle body, and the impingement pin provided on the impingement frame is formed of ceramic such as alumina, whereby abrasion caused by impinging of the straight rod flow is preferably reduced.

It is preferable that the nutrient solution having a required pressure is supplied to the nozzle through the nutrient solution supply pipe by a pump, and the spray pressure of the nozzle is set to 0.5 MPa to 2 MPa. It is preferable that discharge pressure of the pump is changed depending on length of the growing root of the cultivation plant and the spray pressure of the nozzle is gradually increased within a range of 0.5 MPa to 2 MPa to increase the spray amount.

Since the present invention is mainly intended for agricultural management, the cultivation box is, for example, made to be a large cultivation box formed by connecting a plurality of units, where one unit has 1 m of length, 0.5 m of width and 0.3 m of height, according to the cultivation facility. Inside this large cultivation box, it is preferable to arrange the cultivation plants at intervals of 50 cm to 100 cm in the length direction.

It is preferable that the plant cultivation apparatus of the present invention comprises a generator that operates in a power failure or a battery that is supplied with power from a solar power generation panel for charging.

It is preferable that a CO₂ supply device that supplies CO₂ to the rhizosphere portion of the cultivation box is further provided. Specifically, a CO₂ tank is disposed outside the cultivation box, and CO₂ may be supplied to the cultivation box through a supply pipe from the CO₂ tank into the rhizosphere portion, thereby promoting growth of the cultivation plant.

It is preferable that an abnormality notification device that raises an alarm in detecting any one of: power failure and abnormal occurrence of an electric component provided on a nutrient solution supply means to the nozzle, such as a pressure gauge, a flow meter, a solenoid open/close valve, a driving device of a pump or the like provided on a pipe, for example; abnormal water level occurrence in various tanks such as a fertilizer tank storing the nutrient solution and a waste liquid return tank; disconnection occurrence of a CO₂ sensor installed in the rhizosphere portion; and disconnection occurrence of a solar radiation sensor, is provided. The abnormality notification device preferably has a function of transmitting an alarm to a portable communication device of a worker.

It is preferable that a clarifying device that sterilizes a waste liquid collected through the waste liquid port by using UV, ozone or a photocatalyst, an automatic cleaning filter device that filtrates a purified waste liquid, and a pipe returning from the automatic cleaning filter device to a fertilizer tank are provided.

Furthermore, for preventing overheating of the nutrient solution stored in the fertilizer tank, it is preferable that a chiller device that prevents overheating is provided. Specifically, the chiller device and the fertilizer tank are connected to each other via a pipe, and the nutrient solution cooled by the chiller device is returned to the fertilizer tank.

It is preferable that a controller that automatically controls at least one of a CO₂ concentration in the rhizosphere portion of the cultivation box and a spray cycle of the nutrient solution, depending on a growth stage of the plant and an amount of solar radiation, is further provided.

### ADVANTAGEOUS EFFECTS OF INVENTION

In the plant cultivation apparatus of the present invention, a cultivation box for hanging a root of a cultivation plant therein is constructed by detachably combining an upper panel and a lower panel and detachably installing a gutter for draining a waste liquid on the lower panel, whereby the cultivation box can be assembled easily and inexpensively, and the initial cost can be reduced. Further, a nozzle disposed inside the cultivation box can be easily attached by inserting it into a nozzle-mounting hole from outside of the upper panel.

In addition, in the cultivation box, since the nozzle is hung in a hollow rhizosphere portion through the nozzle-mounting hole provided on an upper end of the upper panel and planting holes are provided on both inclined side walls, cultivation plants can be arranged at high density, the size of the cultivation box can be reduced, and the number of the nozzle spraying the nutrient solution to be absorbed by the roots can be decreased.

Furthermore, droplets of surplus nutrient solution (namely, a waste liquid) that fall downward in the hollow rhizosphere portion of the cultivation box accumulate on the bottom of the lower panel, droplets attached to the side wall also fall from the side wall to the bottom by their own weight, and the waste liquid flows down to the lower gutter through a waste liquid port provided on the bottom wall of the lower panel; and therefore, the waste liquid does not accumulate at the bottom of the rhizosphere portion and the root of the grown cultivation plant is prevented from soaking in the waste liquid and becoming root rot.

### BRIEF DESCRIPTION OF THE DRAWINGS

Fig. 1(A) shows a schematic perspective view of a cultivation facility of a plant cultivation apparatus according to a first embodiment of the present invention, and Fig. 1(B) shows a perspective view of a cultivation box installed in the cultivation facility.
Fig. 2(A) shows a side view of a cultivation box in a state of being held by a stand, Fig. 2(B) shows an enlarged side view of the cultivation box, and Fig. 2(C) shows a cross-sectional view of the cultivation box in a length direction thereof.
Fig. 3 shows an upper panel of a cultivation box, wherein Fig. 3(A) is a plan view, Fig. 3(B) is a perspective view, and Fig. 3(C) is a cross-sectional view.
Fig. 4 shows a lower panel of a cultivation box, wherein Fig. 4(A) is a bottom view, Fig. 4(B) is a perspective view, and Fig. 4(C) is a cross-sectional view.
Fig. 5 shows a perspective view of a gutter.
Fig. 6 shows a pot for a cultivation plant, wherein Fig. 6(A) is a perspective view, Fig. 6(B) is a front view, and Fig. 6(C) is a plan view.
Fig. 7(A) shows a schematic view of a nozzle hung in a cultivation box, and Fig. 7(B) shows an enlarged cross-sectional view of Fig. 7(A).
Fig. 8(A) is a drawing showing a connection part between a nozzle and a joint pipe of a nutrient solution supply pipe, Fig. 8(B) shows a side view of the joint pipe, and Fig. 8(C) is a bottom view of Fig. 8(B).
Fig. 9(A) shows a cross-sectional view of a nozzle integrated with a strainer, and Fig. 9(B) shows a cross-sectional view of a main part of the nozzle.
Fig. 10 is a drawing showing equipment of a cultivation facility.
Figs. 11(A) and 11(B) show side views of a second embodiment of a cultivation box in which a lower panel is changed.
Figs. 12(A), 12(B), and 12(C) show schematic views of a third embodiment of a cultivation box in which widths and depths of an upper panel and a lower panel are changed.
Fig. 13 shows a cross-sectional view of a fourth embodiment of a cultivation panel including an intermediate panel.
Fig. 14 shows a side view of a fifth embodiment in which cultivation boxes are installed in upper and lower multiple stages.
Fig. 15 shows a pin jet nozzle according to a sixth embodiment, wherein Fig. 15(A) shows a cross-sectional view of a pin jet nozzle with a strainer, Fig. 15(B) shows a side view of the strainer, Fig. 15(C) shows a partial cross-sectional view of the strainer, and Fig. 15(D) shows an explanatory view of a state where a straight rod flow ejected from an ejection hole of a nozzle body impinging on an impingement pin.
Fig. 16 shows a cross-sectional view of another pin jet nozzle according to a seventh embodiment.
Figs. 17(A) and 17(B) are drawings showing a conventional example.

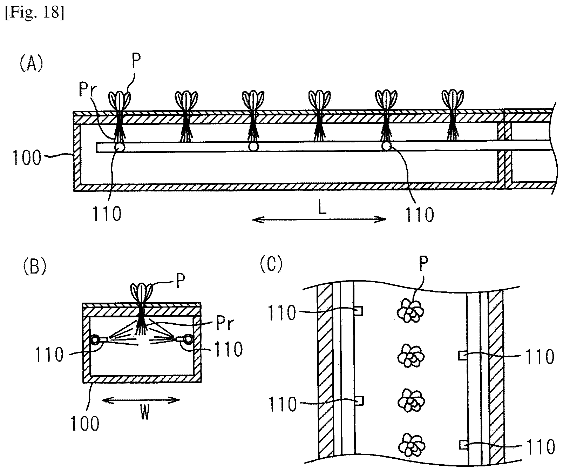

Figs. 18(A) to 18(C) are drawings showing another conventional example.

### DESCRIPTION OF THE PREFERRED EMBODIMENTS

Hereinafter, embodiments of a plant cultivation apparatus of the present invention are described with reference to the drawings.

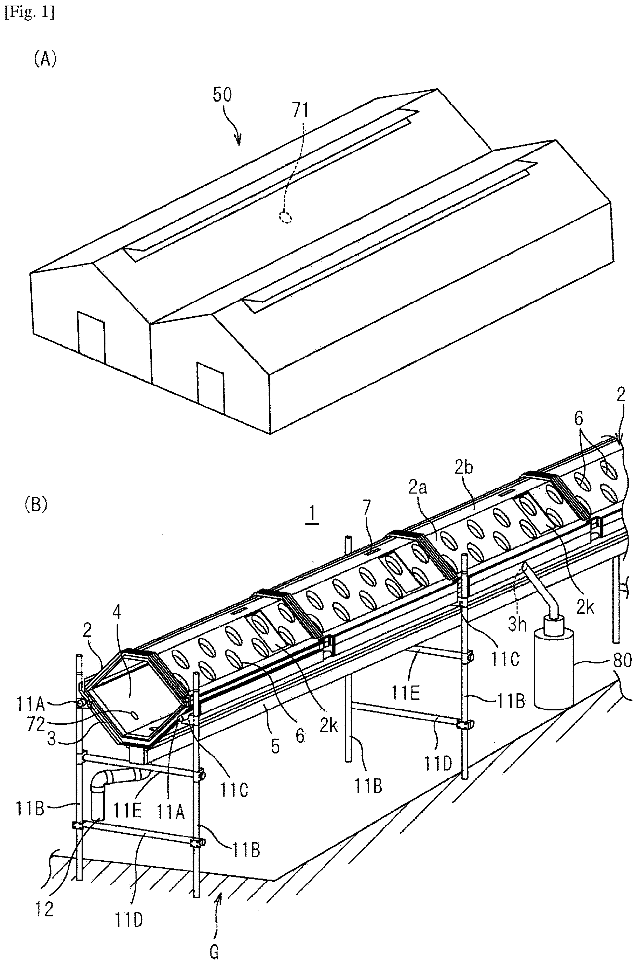

A first embodiment is shown in Figs. 1 to 10.

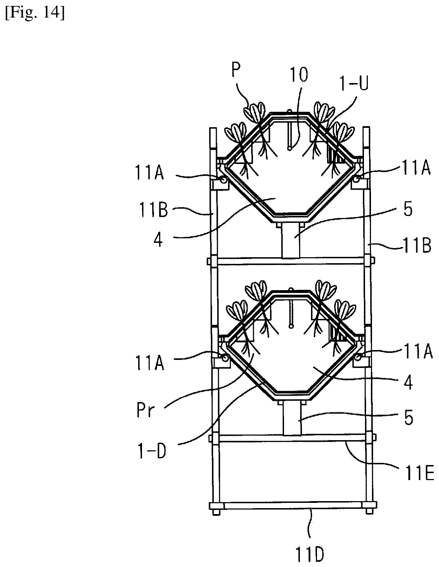

A plant cultivation apparatus is configured such that many rows of cultivation boxes 1 shown in Fig. 1(B) are arranged through worker passages inside a cultivation facility 50 composed of a vinyl house or a glass-covered greenhouse that takes in sunlight, as shown in Fig. 1(A). In this embodiment, the cultivation boxes 1 are arranged in eight rows in one house of the cultivation facility. In addition, in this embodiment, a cultivation plant P is a tomato or the like that becomes tall when growing, so that the cultivation boxes 1 are provided in one stage in each row. In the case of leafy vegetables such as lettuce that has a low height, the cultivation boxes 1 are provided in two stages in each row, as shown in Fig. 14. Further, three or more stages may be provided. In addition, the cultivation box may be installed in a plant factory whose inside is a cultivation facility, instead of a greenhouse or the like that takes in sunlight.

The cultivation box 1 is constructed by detachably combining an upper panel 2 and a lower panel 3 to provide a hollow rhizosphere portion 4 serving as a long closed space for hanging a root Pr of the cultivation plant P, and detachably installing a gutter 5 below the lower panel 3. Openings formed at both ends in the length direction when the upper panel and the lower panel extending in the length direction are assembled are closed by both-end closing panels (not shown), thereby forming the hollow rhizosphere portion 4.

The upper panel 2, the lower panel 3 and the gutter 5 are made of resin or styrene foam. When made of resin or styrene foam, the weight and cost are reduced. The material is not limited as long as it has a required strength, durability, weather resistance, and light weight. The cultivation box 1 has a size which allows the cultivation plants P to be cultivated at certain intervals, and in the present embodiment, the cultivation box 1 has height H of approximately 30 cm and width W of 50 cm, and the length is adjusted according to the cultivation facility 50 by connecting the plurality of cultivation boxes 1 in the length direction. The height H and the width W may be changed depending on the cultivation plant.

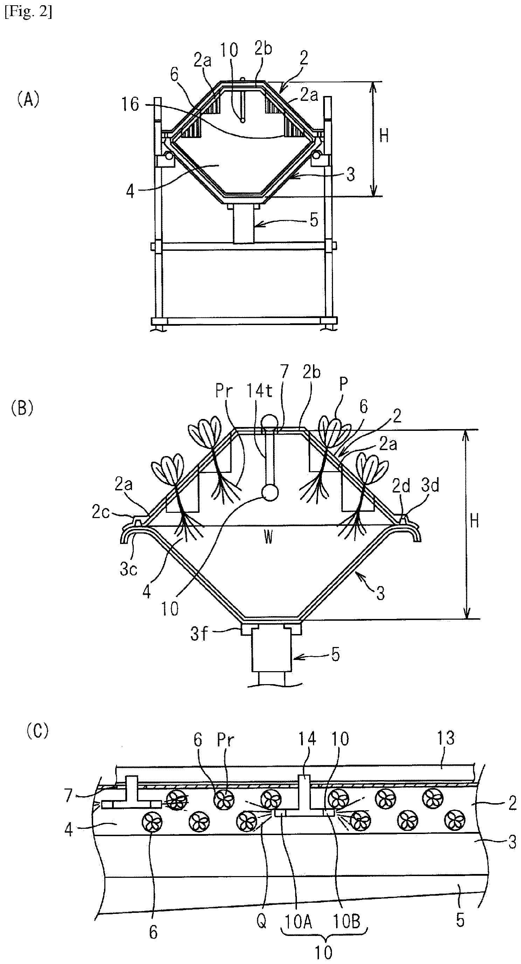

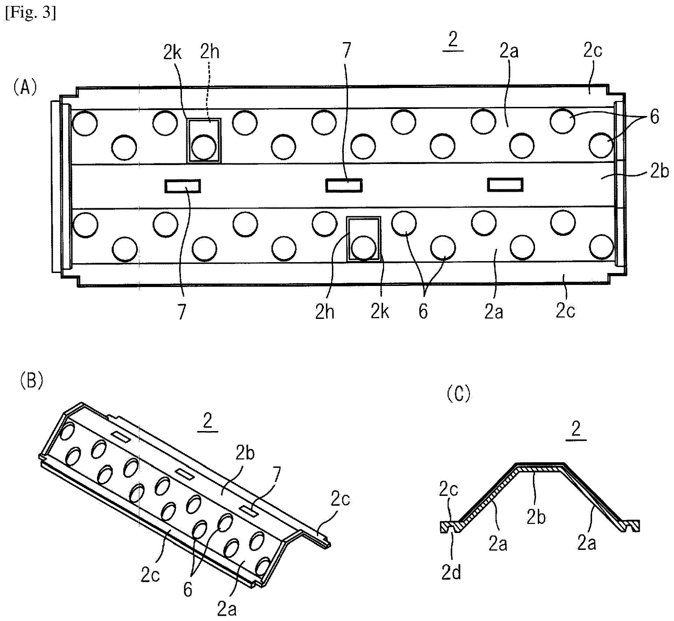

As shown in Figs. 2 and 3, the upper panel 2 has a substantially mountain shape, and planting holes 6 are provided on inclined side walls 2a on both sides that are formed spreading downward, and arranged in upper and lower two rows in staggered arrangement. Nozzle-mounting holes 7 for inserting the nozzles 10 are provided on a top surface 2b, which is positioned between the inclined side walls 2a on both sides, at intervals in the length direction, and the upper panel 2 functions as a planting panel and a nozzle mounting panel.

A mounting portion 2c is provided so as to protrude outward from a lower end of the inclined side wall 2a, and a downward fitting concave portion 2d is provided on a lower surface of the mounting portion 2c. The nozzle-mounting hole 7 provided on the top surface 2b is a rectangular hole having a long side in the length direction, and has such a size that allows a nutrient solution supply pipe 14 to pass smoothly with the pair of front and rear nozzles 10 (10A, 10B) attached to a lower end of the nutrient solution supply pipe 14. One nozzle-mounting hole 7 is provided for each of the plurality of planting holes 6 aligned in the longitudinal direction. In this embodiment, one nozzle-mounting hole 7 is provided for three planting holes 6 (for six upper and lower planting holes 6 arranged in a staggered manner).

Furthermore, an internal observation hole 2h is provided on the inclined side wall 2a at a position close to the nozzle-mounting hole 7, and a cover 2k for opening and closing the internal observation hole 2h is provided.

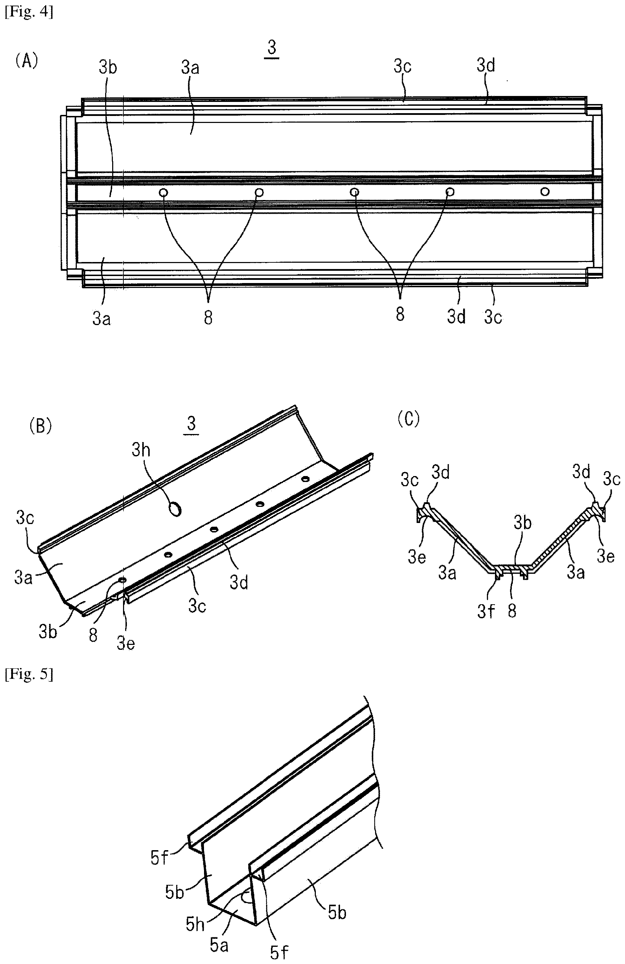

As shown in Figs. 2 and 4, a waste liquid port 8 is provided on a bottom wall 3b which is substantially symmetrical with the upper panel 2 and is opposed to the top surface 2b of the upper panel 2 at intervals in the length direction. A receiving plate portion 3c, on which the mounting portion 2c is put, is provided so as to protrude outward from an each upper end of inclined side walls 3a sandwiching the bottom wall 3b, a fitting convex portion 3d which fits the fitting concave portion 2d of the upper panel 2 is provided on an upper surface of the receiving plate portion 3c, and a pipe-receiving concave portion 3e is provided on a lower surface of the receiving plate portion 3c. Further, a fitting protrusion 3f for attaching the gutter 5 on the entire outer surface of the bottom wall 3b is provided.

Further, as shown in Fig. 1(B), a CO₂ introduction port 3h is provided on the inclined side wall 3a of the lower panel 3, and CO₂ can be introduced into the hollow rhizosphere portion 4 from a CO₂ tank 80 installed outside the cultivation box 1. The supply time and amount of CO₂ from the CO₂ tank 80 are automatically controlled depending on the detection values of a CO₂ sensor 72 installed in the rhizosphere portion 4 and a solar radiation sensor 71 installed in the greenhouse, and further a growth stage of the plant.

As shown in Fig. 5, the gutter 5 has a trough shape composed of a bottom wall 5a and both side walls 5b, a fitting concave portion 5f for fitting the fitting protrusion 3f is provided at an each upper end of both side walls 5b, and an outlet port 5h connected to an upper end of a drain pipe 12 is provided at one end of the gutter.

As shown in Fig. 2(C), the bottom wall 5a of the gutter 5 may be formed to be a slope in which a waste liquid flows down from one end to the other end in the length direction, that is, may be an inclined bottom wall. Alternatively, the cultivation box 1 itself composed of three members may be inclined.

The mounting portion 2c of the upper panel 2 is put on the receiving plate portion 3c of the lower panel 3 and the fitting convex portion 3d is fitted into the fitting concave portion 2d to assemble a horizontally long box with the hollow rhizosphere portion 4 having a hexagonal cross section, and the gutter 5 is assembled to the lower panel 3, whereby the cultivation box 1 is constructed by three members. The cultivation box 1 is held by a stand composed of commercially available agricultural pipes and receiving fittings. Specifically, as shown in Fig. 1(B), a lengthwise pipe 11A which fits into the pipe-receiving concave portion 3e of the receiving plate portion 3c of the lower panel 3 is supported by brackets 11C attached to left and right support pipes 11B. The left and right support pipes 11B are installed by being stuck into the ground G and connected to a lower connection pipe 11D and an upper connection pipe 11E which supports a lower surface of the gutter 5.

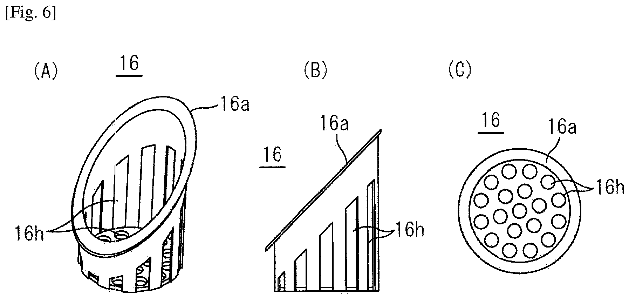

The root Pr of the cultivation plant P is hung in the hollow rhizosphere portion 4 of the cultivation box 1 from the planting hole 6 of the upper panel 2 by using pot 16 shown in Figs. 6(A) to 6(C).

The pot 16 is made of a resin molded product, and has a cylindrical shape with an upper opening to be inserted into the planting hole 6, wherein the upper end thereof is inclined and its inclined periphery has an engaging piece 16a protruding therefrom for engaging, so as to be capable of being inserted into and engaged with the planting hole 6 provided on the inclined side wall 2a. In addition, a large number of openings 16h are provided on the outer peripheral wall and the bottom wall so that the root Pr of the cultivation plant P can extend into the rhizosphere portion 4 through the opening 16h.

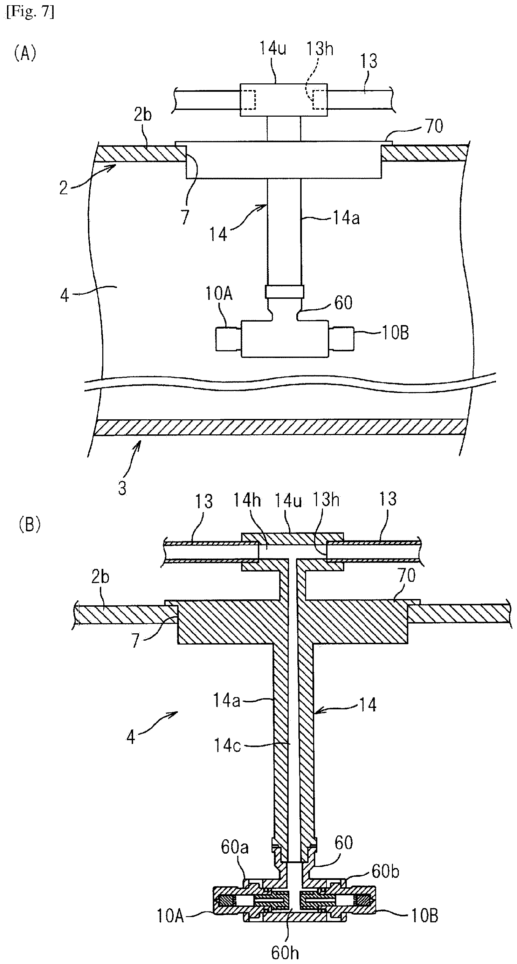

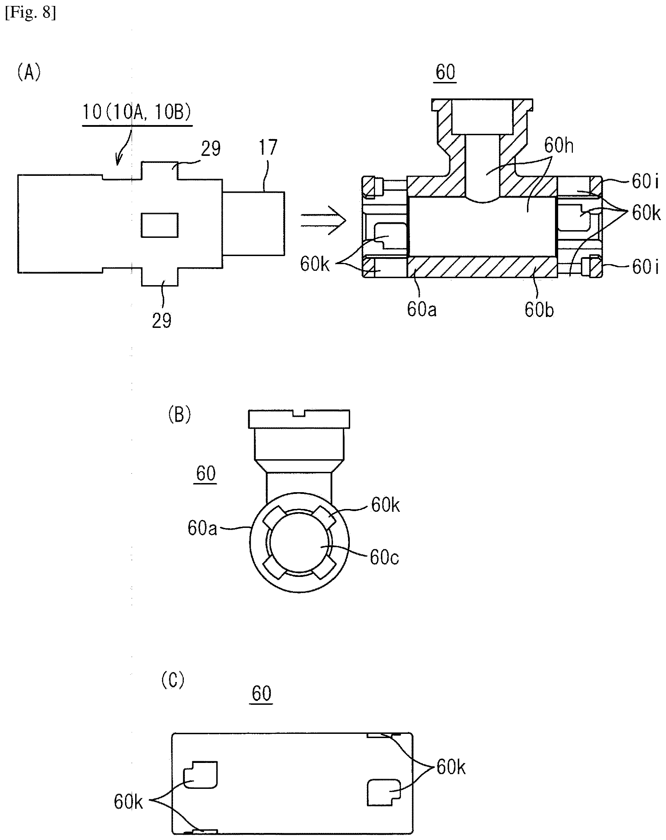

A one-fluid nozzle that sprays only nutrient solution is used as the nozzle 10 to be inserted and mounted in the nozzle-mounting hole 7 of the upper panel 2. As shown in Figs. 7 and 8, a main nutrient solution supply pipe 13 is inserted and attached to a through hole 14h of an upper end pipe 14u of a nutrient solution supply pipe 14.

Specifically, as shown in Figs. 7(A) and 7(B), the nutrient solution supply pipe 14 includes a vertical pipe 14a extending downward from a longitudinal center of the upper end pipe 14u extending in the horizontal direction, and cut portions of the main nutrient solution supply pipe 13 are internally fitted and connected to both ends of the through hole 14h of the upper end pipe 14u.

A cover 70 sized to close the rectangular nozzle-mounting hole 7 is fixed to an upper periphery of the vertical pipe 14a. A vertically extending through hole 14c inside the vertical pipe 14a is connected to the through hole 14h of the upper end pipe 14u, thereby forming a shape such that the nutrient solution flowing from the main nutrient solution supply pipe 13 into the through hole 14h of the upper end pipe 14u of the nutrient solution supply pipe 14 flows down in the through hole 14c of the vertical pipe 14a to the lower end thereof.

A joint pipe 60, an inverted T-shaped pipe, is connected to the lower end of the vertical pipe 14a, and a forward-facing nozzle 10A and a rearward-facing nozzle 10B are connected to the respective ends of branch pipes 60a and 60b, which extend in the front-rear length direction at a lower part of the joint pipe 60, by one-touch operation of inserting and rotating.

As shown in Figs. 8(A), 8(B) and 8(C), on peripheral walls of the branch pipes 60a and 60b, insertion holes 60k are provided at 90° intervals, and the insertion holes 60k have locking portions 60i at one end in the rotation direction and have such a shape that when the locking pieces 29 provided on the nozzles 10 (10A, 10B) at 90° intervals described below are inserted into the insertion holes 60k and rotated, the locking pieces 29 can be locked and connected to the locking portions 60i.

The inverted T-shaped through hole 60h of the joint pipe 60 is connected to the lower end of the through hole 14c of the vertical pipe 14a of the nutrient solution supply pipe 14, and the nutrient solution flowing through the through hole 14c is branched and flows into the pair of front and rear nozzles 10A and 10B.

The vertical pipe 14a of the nutrient solution supply pipe 14 in which the pair of front and rear nozzles 10 (10A, 10B) are attached to the lower end thereof via the joint pipe 60 can be smoothly passed through the nozzle-mounting hole 7 on the top surface 2b of the upper panel 2; and when the cover 70 is brought into contact with the top surface 2b, the nozzle-mounting hole 7 is closed and the pair of front and rear nozzles 10 (10A, 10B) are in the state of being hung in the hollow rhizosphere portion 4.

The nozzle-mounting holes 7 are provided at intervals in the length direction, the nutrient solution supply pipes 14 are arranged at intervals in the length direction in the rhizosphere portion 4 of the cultivation box, and by spraying the nutrient solution forward from the forward-facing nozzle 10A and rearward from the rearward-facing nozzle 10B, that are provided at the lower end of each nutrient solution supply pipe 14, the entire rhizosphere portion 4 is almost uniformly filled with mist of the nutrient solution to create a high humidity environment.

Each of the forward-facing nozzle 10A and the rearward-facing nozzle 10B has a structure such that a strainer 17 is integrally mounted on the upstream side, and the nutrient solution flowing into the strainer 17 from the main nutrient solution supply pipe 13 via the nutrient solution supply pipe 14 and the branch pipe of the joint pipe 60 is subjected to removal of foreign matter by the strainer, then flows into the nozzle 10 and is sprayed. The configuration of the strainer 17 is described below.

The strainer may be installed in a middle of the nutrient solution supply pipe or between the nutrient solution supply pipe and the joint pipe.

The nozzle 10 (10A, 10B) is a one-fluid nozzle, and sprays only nutrient solution obtained by diluting fertilizer with water at a predetermined ratio. That is, a two-fluid nozzle that requires an air compressor as in a conventional example shown in Fig. 17 is not used.

The nozzle 10 of a one-fluid nozzle is a hollow conical spray nozzle which sprays the nutrient solution as a swirling flow from a tip of an ejection hole of the nozzle. The average particle size of the spray from the nozzle 10 is set to 10 µm to 30 µm in the present embodiment.

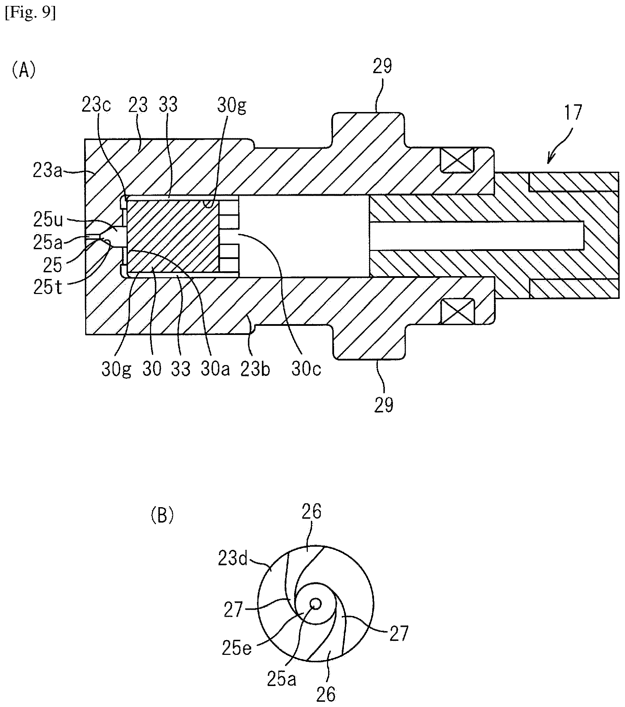

As shown in Fig. 9, the nozzle 10 is composed of two members, a nozzle body 23 and a closer 30, both of which are made of a resin molded product. The nozzle body 23 comprises an ejection-side wall 23a and an outer peripheral wall 23b continuous with an outer periphery of the ejection-side wall, and the other end facing the ejection-side wall 23a is opened. The closer 30 is fixedly accommodated in a space 23c surrounded by the ejection-side wall 23a and an inner surface of the outer peripheral wall 23b of the nozzle body 23, and an ejection hole 25 is provided so as to penetrate at a center of the ejection-side wall 23a. The ejection hole 25 has a small-diameter portion connected to an ejection port 25a on the ejection side, a tapered hole 25t of which inflow end side is enlarged is connected to the small-diameter portion, and the tapered hole is connected to a large-diameter straight passage 25u.

As shown in Fig. 9(B), in the nozzle body 23, an inner surface of the ejection-side wall 23a on the inlet side, that faces the space 23c, is provided with a circular-shaped step part surrounding a large-diameter inflow port 25e which is opened at the center, and a pair of arc-shaped swirling grooves 26 are formed at 180° intervals on the step part. The inner peripheral ends of the swirling grooves 26 are opened and connected to the large-diameter inflow port 25e at 180° intervals.

The swirling groove 26 is curved in an arc shape, gradually narrowed toward the inner peripheral end, and has an orifice 27 having a minimum width on the inner peripheral end. The width of the opening of the orifice 27 is the same as the width of the ejection port 25a, a minimum diameter portion of the ejection hole 25. As a result, foreign matter smaller than the ejection port is not caught by the orifice 27 of the swirling groove 26 and is discharged outside together with the sprayed nutrient solution from the ejection port 25a. Further, the swirling groove 26 has a U-shaped cross section and its bottom is formed in a round shape, and no edge to which foreign matter is caught is present, so that foreign matter can be easily removed at a time of maintenance.

The closer 30 has a substantially cylindrical shape and has a liquid inlet port 30c at a center of the leading end on the inlet side. The closer 30 is fixedly accommodated in the space 23c of the nozzle body 23, an ejection-side end face 30a having a flat surface of the closer 30 is pushed and contacted to the step part 23d of the nozzle body 23 and an outer peripheral surface of the closer 30 is pushed and contacted to an inner surface of the outer peripheral wall 23b of the nozzle body 23.

As the ejection-side end face 30a of the closer 30 is pushed and contacted to the step part 23d surrounding the large-diameter inflow port 25e of the nozzle body 23, the swirling grooves 26, 26 are formed as swirling passages having a closed cross section.

Four arc-shaped depressions are formed on the outer peripheral surface 30g of the closer 30 at 90° intervals, thereby forming liquid passages 33 between the outer peripheral wall 23b of the nozzle body. The liquid passage 33 is connected to a liquid inlet portion of the nozzle body 23.

A radial liquid passage connected to a depression of the liquid inlet port 30c is provided on the outer peripheral wall surrounding the liquid inlet port 30c of the closer 30. Thereby, liquid flowing into the liquid inlet port 30c of the closer 30 flows into the liquid inlet portion of the nozzle body 23 through the liquid passage 33, flows into the ejection hole 25 through the swirling groove 26 as a swirling flow, and is sprayed outside from the ejection port 25a at the tip.

The nozzle 10 assembled by fixing the closer 30 inside the nozzle body 23 is attached by one-touch operation of inserting the inlet side of the nozzle body 23 into the end of each of the branch pipes 60a and 60b of the joint pipe 60 connected to the lower end of the nutrient solution supply pipe 14 and then rotating, as described above.

The strainer 17, which is integrally fixedly accommodated in the inlet side of the nozzle body 23, is made of a resin material having three-dimensionally continuous pores and having a porosity of 40% to 80%. In the nozzle 10, the sizes of the ejection port 25a and the orifice 27 of the swirling groove 26 are larger than an average diameter of the pores of the strainer 17 so that foreign matter that may cause the clog of the orifice 27 or the ejection port 25a of the nozzle can be caught by the strainer 17 in advance.

The nutrient solution Q supplied from the main nutrient solution supply pipe 13 is introduced into the strainer 17 integrated with the nozzle 10 through the nutrient solution supply pipe 14 and the branch pipes 60a and 60b of the joint pipe 60, and foreign matter mixed in the nutrient solution Q is caught by the strainer 17. The nutrient solution that has passed through the strainer 17 flows into the closer 30 in the nozzle 10 and further flows into the swirling groove 26 through the liquid passage 33.

In the process of flowing through the swirling groove 26, a cross-sectional area of the flow passage is gradually reduced toward the orifice 27 so that the liquid pressure is increased, and the fluid flows into the ejection hole 25 while swirling and is sprayed from the ejection port 25a of the nozzle body 23 while swirling, thereby scattered outside. Since the injection pressure is increased at the orifice 27 of the swirling groove 26 and the minimum diameter portion of the ejection hole 25, flight distance of the spray ejected to the outside is increased. In addition, since the fluid passes through the ejection hole 25 while swirling in the state of being swirled in the swirling groove 26, the droplets collide with each other and are atomized. In this manner, due to its excellent atomization function, semi-dry fog having an average particle diameter of 10 µm to 100 µm, preferably 10 µm to 50 µm or less, more preferably 10 µm to 30 µm can be sprayed, even when the spray pressure is as low as 0.5 MPa to 2 MPa.

In the case where foreign matter is mixed in the nutrient solution Q supplied from the main nutrient solution supply pipe 13, first, foreign matter to be caught by the orifice 27 and the ejection hole 25 is previously caught by the pores of strainer 17 at the time of passing through the strainer 17. Therefore, foreign matter to be caught by the orifice 27 and the minimum diameter portion of the ejection hole 25 does not flow into the nozzle 10. Further, foreign matter which is smaller than the minimum diameter portion of the ejection hole 25 and passes through the strainer 17 is discharged from the ejection hole 25 to the outside without being caught by the orifice 27 of the swirling groove 26. As a result, the function of preventing clogging due to foreign matter in the ejection hole 25 and the orifice 27 is also excellent.

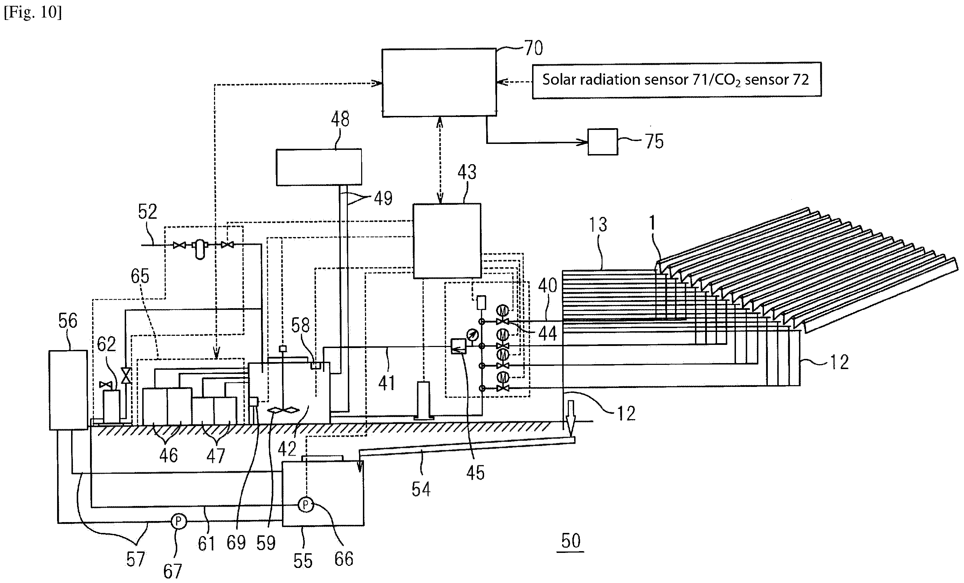

In the cultivation facility 50 provided with the cultivation box 1 of the present invention, the plurality of main nutrient solution supply pipes 13 (four in this embodiment) to be piped to the top surface 2b of the upper panel 2 of each cultivation box 1 are collectively connected to a supply pipe 40, and the supply pipe 40 is collectively connected to a fertilizer tank 42 that stores the nutrient solution to be sprayed through a supply main pipe 41, as shown in Fig. 10. A water level sensor 58, a stirrer 59, and an EC/PH sensor 69 are installed in the fertilizer tank 42. An electric open/close valve 44 controlled by a control panel 43 is provided on each of the supply pipe 40, and a pump 45 controlled by the control panel 43 is provided on the main supply pipe 41. The fertilizer tank 42 is connected to a water supply pipe 52 and is further connected to a concentrated liquid fertilizer tank 46 and an acid-alkali tank 47 via a pipe, thereby providing a liquid fertilizer mixing unit 65. Furthermore, the fertilizer tank 42 is connected to a circulation type chiller device 48 via a circulation pipe 49 to prevent the liquid fertilizer stored in the fertilizer tank 42 from overheating.

Further, the drain pipe 12 connected to the gutter 5 is connected to a return tank 55 via a drain pipe 54, and a waste liquid collected in the return tank 55 is connected to a purification device 56 via a circulation pipe 57 and is returned to the return tank 55 by a pump 67. In the purification device 56, the waste liquid is sterilized by using UV, ozone, a photocatalyst or the like to be regenerated as a nutrient solution. In addition, in order to reuse the purified waste liquid stored in the return tank 55, a pump 66 is installed in the tank, the pumped waste liquid is transported through a pipe 61 and is filtered through an automatic cleaning filter 62, and then returned to the fertilizer tank 42. In this way, the waste liquid that has been purified by filtration is supplied to the fertilizer tank 42, whereby the nutrient solution is reused without waste.

The control panel 43 is electrically connected to the electric open/close valve 44, the water level sensor 58, the stirrer 59 and the EC/PH sensor 69 that are installed in the fertilizer tank 42, and further connected to an electromagnetic open/close valve, a pressure sensor and a flow rate sensor that are installed on various pipes and the pump 66 in the return tank 55, and outputs drive signals as well as receives detection values from the various sensors.

In addition, in the greenhouse of the cultivation facility 50, a solar radiation sensor 71 is provided as shown in Fig. 1(A), and a controller 70 that receives detection values of the solar radiation sensor 71 and a CO₂ sensor 72 installed in the rhizosphere portion in the cultivation box 1 is installed. The controller 70 also receives detection values of the various sensors from the control panel 43. According to the EC value and the PH value detected by the EC/PH sensor 69 installed in the fertilizer tank 42, the amount of solar radiation detected by the solar radiation sensor 71 and the growth stage of the cultivation plant, the controller 70 transmits a command for controlling the supply amounts of the concentrated liquid, and acid and alkali components to be supplied to the fertilizer tank 42 from the concentrated liquid fertilizer tank 46 and the acid-alkali tank 47 of the liquid fertilizer mixing unit 65. In addition, when a power outage and an abnormality of the electric parts, an abnormality of a water level in the tank, a disconnection of the CO₂ sensor 72 installed in the rhizosphere portion, or a disconnection of the solar radiation sensor 71 is detected, the controller 70 transmits an alarm notifying the abnormality to the portable communication device 75.

Furthermore, a generator that operates in a power failure, or a battery that is supplied with power from a solar power generation panel for charging, is equipped.

Further, the controller 70 automatically controls a CO₂ concentration in the rhizosphere portion in the cultivation box 1 and a spraying cycle of the nutrient solution from the fertilizer tank 42 depending on the plant growth stage and the detection value of the solar radiation sensor 71. The growth stage of the plant is divided into, for example, an initial stage, a middle stage and a final stage.

In the plant cultivation apparatus of the present invention, the nutrient solution is sprayed toward the rhizosphere portion 4 of the cultivation plant P in the respective cultivation boxes 1 from the nozzles 10 (10A, 10B) via the nutrient solution supply pipe 14 and the joint pipe 60 provided with the branch pipe, thereby creating humidified nutrient solution environment. The spray is conducted so as to have an average particle diameter of 10 µm to 50 µm (10 µm to 30 µm in the present embodiment), so that it can be prevented from agglomerating and dropping as water droplets, is floated in air in the cultivation box 1, and an absorption efficiency of the nutrient solution can be increased, since roots Pr of the cultivation plant P can easily adsorb the nutrient solution. In addition, the amount of the nutrient solution sprayed from the nozzle is set so that the humidity in the rhizosphere portion of the cultivation box 1 is high.

Further, since the plurality of pairs of front and rear nozzles 10 (10A and 10B) are arranged at intervals in the cultivation box 1, there is no need to extend the spraying distance from each nozzle 10, and therefore, a one-fluid nozzle which sprays only the nutrient solution without mixing with a compressed air can be used as the nozzle 10. In addition, there is no need to install a fan for circulating the spray in the cultivation box 1, and so an air compressor and a fan can be eliminated, thereby reducing running costs and equipment costs.

In particular, in the present cultivation box 1, the nozzle 10 is hung from the top surface 2b, that is the upper end of the upper panel 2, in the hollow rhizosphere portion 4, the planting holes 6 are provided on the inclined side walls 2a, 2a on both sides in upper and lower two rows, and the root Pr of the cultivation plant P is placed in the pot 16 and hung in the hollow rhizosphere portion 4. Therefore, while the cultivation box 1 is downsized, the cultivation plants P can be planted at a high density, and the number of nozzles 10 for spraying the nutrient solution to the rhizosphere portion of these cultivation plants can be reduced.

Further, droplets of the surplus nutrient solution (namely, the waste liquid) that fall downward in the hollow rhizosphere portion 4 fall to the bottom of the lower panel 3, and droplets attached to the side wall can also fall to the bottom. And, since the waste liquid port 8 is provided on the bottom wall 3b of the lower panel 3 and is formed to allow the waste liquid to flow down to the lower gutter 5, the waste liquid does not accumulate at the bottom of the lower panel 3 and the root Pr of the grown cultivation plant is prevented from soaking in the waste liquid and becoming root rot. Further, since the gutter 5 is connected to the drain pipe 12, the waste liquid can be automatically stored in the return tank 55. The waste liquid stored in the return tank 55 is transported to the purification device 56 for purification, and can be returned to the fertilizer tank 42 after being filtered through the automatic cleaning filter and reused.

The nozzle 10 can be easily attached to the upper panel 2 simply by piping the main nutrient solution supply pipe 13 on the top surface 2b, placing the nozzle 10 in the nozzle-mounting hole 7 and inserting it, and the nozzle-mounting hole 7 can be closed by the cover 70 fixed to the nutrient solution supply pipe 14 to which the nozzle 10 is attached. Conversely, at the time of maintenance of the nozzle 10, the nozzle 10 can be taken out simply by pulling the nutrient solution supply pipe 14 upward. Thus, there is an advantage that the attachment and maintenance of the nozzle 10 are facilitated.

In addition, since the internal observation hole 2h is provided in the vicinity of the nozzle mounting portion, the inside of the hollow rhizosphere portion 4 can be easily observed by removing the cover 2k.

Further, since CO₂ is supplied into the cultivation box 1 from the CO₂ tank 80, the growth of the cultivation plant can be promoted. In addition, the control panel 43 and the controller 70 are installed, so that the EC and PH of fertilizer to be applied can be automatically adjusted appropriately depending on the growth stage of the cultivation plant. Further, the operator can be notified of the abnormality of the electric system, so that the work efficiency can be improved as well as the work load can be reduced.

Furthermore, the cultivation box 1 can be easily assembled from the upper panel 2, the lower panel 3 and the gutter 5 inside the cultivation facility 50. These upper panel 2 and the lower panel 3 can be transported to the cultivation facility in a stacked manner, so that the transportability is excellent and the initial cost can be reduced.

The nutrient solution to be sprayed is prevented from overheating in the fertilizer tank 42 by using the chiller device 48, so that it is possible to prevent the temperature inside the cultivation box 1 from rising by spraying and the root Pr from being killed.

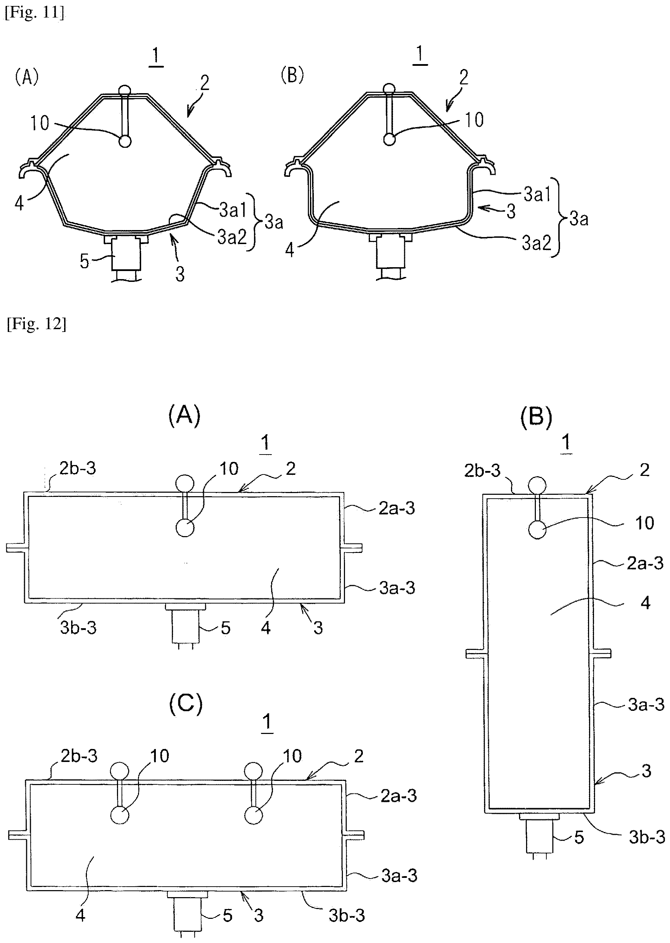

Figs. 11(A) and 11(B) show a second embodiment in which the form of the cultivation box is changed.

As shown in the drawing, the inclined side walls 3a on both sides of the lower panel 3 may be configured so as to have a stepped shape including an upper portion 3a1 having a steep inclination angle and a lower portion 3a2 having a gentler inclination angle on the bottom side. With the shapes of the modified examples (A) and (B), the volume of the lower part of the hollow rhizosphere portion 4 surrounded by the upper panel 2 and the lower panel 3 can be increased, and even when the roots Pr of the cultivation plant P grow, entanglement between the roots can be suppressed and the flight distance of the spray from the nozzle 10 can be secured.

Figs. 12(A), 12(B) and 12(C) show a third embodiment in which the form of the cultivation box is changed.

In the cultivation box 1 of the third embodiment, the side walls 2a-3 on both sides of the upper panel 2 and the side walls 3a-3 on both sides of the lower panel 3 are vertical, and the top surface 2b-3 of the upper panel 2 and the bottom wall 3b-3 of the lower panel 3 are horizontal.

The third embodiment A of Fig. 12(A) is wide and shallow, and the volume of the hollow rhizosphere portion 4 is expanded in the width direction. The nozzle-mounting hole is provided at a center in the width direction of the top surface 2b-3 of the upper panel 2, and the nozzle 10 is inserted and hung in the rhizosphere portion 4. Planting holes are provided (not shown) at positions sandwiching the nozzle-mounting holes into which the nozzles 10 are inserted, and pots for filling the roots of the cultivation plants are put in these planting holes as in the first embodiment.

This third embodiment A is suitably applied in the case where the roots of the cultivation plant are spread horizontally.

The third embodiment B of Fig. 12(B) is narrow and deep, the volume of the hollow rhizosphere portion 4 is increased in the depth direction, and is suitably applied in the case where the cultivation plant has a vertically long root.

The third embodiment C of Fig. 12(C) has the same width and shallow depth as the third embodiment A, and the volume of the hollow rhizosphere portion 4 is expanded in the width direction. In the third embodiment C, two nozzle-mounting holes are provided at intervals in the width direction of the top surface 2b-3 of the upper panel 2, and the nozzles 10 are inserted and hung in the rhizosphere portion 4, respectively. Planting holes are provided (not shown) at positions sandwiching the nozzle-mounting holes into which the nozzles 10 are inserted, and pots for filling the roots of the cultivation plants are put in these planting holes as in the first embodiment. In the cultivation box of the third embodiment C, cultivation plants can be cultivated in two rows in the width direction. In addition, it is also possible to extend the width of the cultivation box further, hang the nozzles in three or four rows, and cultivate the cultivation plants by arranging in three or four rows so as to face each other.

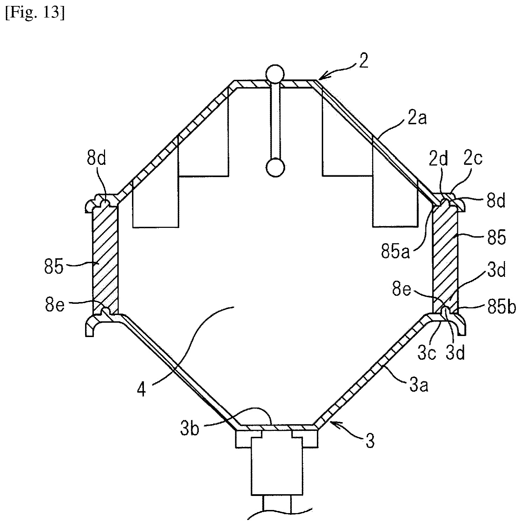

Fig. 13 shows a fourth embodiment in which the form of the cultivation box is changed.

In the above first to third embodiments, the hollow rhizosphere portion 4 is formed by the upper panel 2 and the lower panel 3; however in the fourth embodiment, an intermediate panel 85 of a rectangular flat plate is interposed between the inclined side walls 2a, 3a of the upper panel 2 and the lower panel 3 on both sides, whereby the volume of the rhizosphere portion 4 is increased. Specifically, an upper end surface 85a of the intermediate panel 85 is brought into contact with the mounting portion 2c protruding outward from the lower end of the inclined side wall 2a of the upper panel 2, and a fitting convex portion 8d which fits the fitting concave portion 2d provided on the lower surface of the mounting portion 2c is provided so as to protrude from a center of the upper end surface 85a.

Similarly, a lower end surface 85b of the intermediate panel 85 is brought into contact with the receiving plate portion 3c protruding outward from the upper end of the inclined side wall 3a of the lower panel 3, and a fitting concave portion 8e which fits the fitting convex portion 3d provided on the upper surface of the receiving plate portion 3c is provided so as to protrude from a center of the lower end surface 85b.

As to the upper panel 2 and the lower panel 3, the same panels can be used as in the case where they are directly connected to each other without the intermediate panel 85 interposed therebetween, and only by using the intermediate panel 85 having the same shape on the left and right side, it becomes possible to increase the volume of the rhizosphere portion 4 and cope with the case where the growth of the root of the cultivated plant is large.

As described above, by installing the intermediate panel 85 and changing the height of the intermediate panel without changing the upper panel and the lower panel, the volume of the rhizosphere portion can be changed depending on the amount of root growth of the cultivated plant, thereby enabling coping with the cultivated plant.

Fig. 14 shows a fifth embodiment in which the arrangement of the cultivation boxes 1 in the house of the cultivation facility is changed. In the first embodiment, the cultivation box 1 is composed of a single stage, meanwhile in the fifth embodiment, the cultivation boxes 1 are attached to the support pipe 11B in two upper and lower stages.

In the first embodiment, since a tall tomato or the like is cultivated as the cultivation plant P, the cultivation box 1 is composed of a single stage; however in the case of a short plant such as lettuce or a strawberry, an upper cultivation box 1-U may be provided above a lower cultivation box 1-D with a certain height space as shown in the fifth embodiment. With this configuration, productivity can be increased.

Further, instead of planting the roots of the cultivation plant in the pot, a support sheet is attached to the inner surface of the inclined side wall of the upper panel, a slit for inserting the root is formed at a position for closing the planting hole, and the root may be inserted in the slit to be supported. In addition, the arrangement of the planting holes is not limited to the upper and lower two rows in a staggered arrangement, and may be one row or three or more rows. Further, the shape of the upper panel is not limited to a mountain shape, and the upper panel may have a horizontal upper surface wherein the nozzle-mounting holes may be provided at a center of the upper surface and the planting holes may be provided on both sides of them. Further, the upper surface may be formed in a one-sided triangle shape and installed along an outer wall of the cultivation facility.

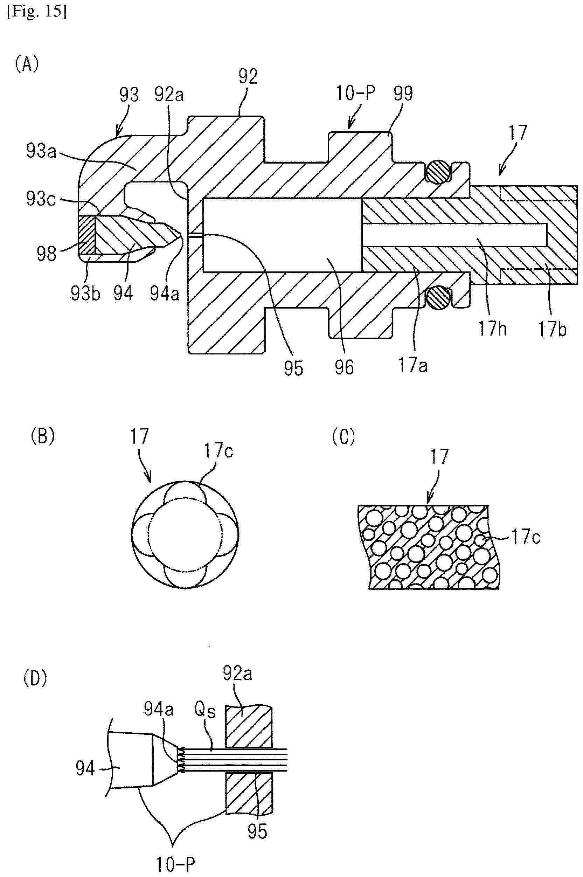

Fig. 15 shows a sixth embodiment in which a pin jet nozzle of a one-fluid nozzle is employed as the spray nozzle.

A pin jet nozzle 10-P provided with a strainer, that is installed at each of the front and rear ends of the joint pipe 60 at the lower end of the nutrient solution supply pipe 14 hung in the rhizosphere portion 4 of the cultivation box 1, is used in stead of the hollow conical nozzle 10 that sprays a swirling flow of the first embodiment. The pin jet nozzle 10-P is configured such that: an ejection hole composed of a straight hole for ejecting a straight rod flow is provided at a center of an ejection-side closing wall of a nozzle body; and an impingement pin, which the straight rod flow impinges on, is provided so as to project from an outer surface of the ejection-side closing wall of the nozzle body at a position facing the ejection hole, whereby the straight rod flow ejected from the ejection hole is made to impinge on the impingement pin to atomize the spray.

Specifically, the pin jet nozzle 10-P is provided with a strainer 17 composed of a porous material made of resin as in the first embodiment.

The nozzle 10-P is provided with a J-shaped impingement frame 93 protruding from an outer surface of an ejection-side wall 92a formed of a closed wall at one end of a cylindrical nozzle body 92 formed by metal injection. The impingement frame 93 includes a vertical frame portion 93a protruding from the outer surface of the distal end of the ejection-side wall 92a and a horizontal frame portion 93b protruding from the distal end of the vertical frame portion 93a across the center axis, and a pin hole 93c is formed at the center axis of the horizontal frame portion 93b on the distal side thereof. A ceramic impingement pin 94 is inserted into the pin hole 93c so as to project toward the ejection-side wall 92a of the nozzle body, and the back side of that is fixed to the pin hole 93c with an adhesive 98. The projecting part of the impingement pin 94 has a conical shape that becomes thinner toward the tip, and has a small-diameter impingement surface 94a.

An ejection hole 95 formed of a straight hole is provided on the center axis of the ejection-side wall 92a at one end of the nozzle body 92, and a straight passage 96 having a circular cross-section and a constant inner diameter surrounded by a flat inner surface of the ejection-side wall 92a and an outer peripheral wall is provided. The ejection hole 95 is connected to the straight passage 96, and the nutrient solution is ejected from the straight passage 96 through the ejection hole 95 as a straight rod flow. The diameter of the impingement surface 94a of the impingement pin 94 is set in the range of 100% to 115% of the diameter of the counter ejection hole 95.

In the nozzle 10-P, spray pressure is set in the range of 0.5 MPa to 2.0 MPa, a spray flow rate is set in the range of 1 L/hr to 5 L/hr, and an average particle diameter of the sprayed nutrient solution is in the range of 10 µm to 100 µm, preferably 10 µm to 50 µm, more preferably 10 µm to 30 µm.

As with the nozzle of the first embodiment, the nozzle body 92 is provided with locking pieces 99 projecting from the outer peripheral wall at 90° intervals so as to be capable of connecting to the branch pipe of the joint pipe by one-touch operation, and as shown in Fig. 8, the connection to the insertion hole 60k provided on the branch pipe at 90° intervals can be made by simply rotating.

The rear end of the nozzle body 92 is an opening, and a front portion 17a of the strainer 17 is accommodated therein. The strainer 17 is made of a resin material having three-dimensionally continuous pores 17c as shown in Fig. 15(C), and has a porosity of 40% to 80%. The strainer 17 has the front portion 17a and a rear portion 17b continuous with each other, and has a liquid passage 17h composed of a center hole extending from a front end of the front portion 17a to a middle part of the rear portion. The liquid passage 17h is opened to the straight passage 96, and is configured so as to flow from the straight passage 96 to the ejection hole 95. Further, as shown in Fig. 14(B), an outer peripheral surface of the rear portion of the strainer 17 is formed such that four arc portions 17c protrude to form a petal shape, thereby increasing a surface area thereof and increasing a liquid absorption amount of the strainer 17.

The nozzle 10-P provided with the strainer 17 of the above-described embodiment is attached to each of the front and rear ends of the joint pipe, which is provided at the lower end of the nutrient solution supply pipe hung in the rhizosphere portion 4 of the cultivation box 1, so as to spray the nutrient solution toward the root of the cultivation plant in the front and rear direction. It flows into the ejection hole 95 through the straight passage 96 of the nozzle body 92 via the strainer 17, is ejected from the narrow ejection hole 95 as a straight rod flow Qs as shown in Fig. 15(D), and impinges on the impingement surface 94a at the tip of the impingement pin 94 at the opposing position. At that time, since the diameter of the ejection hole 95 is minim, pressure of the nutrient solution passing through the ejection hole 95 is increased, and the straight rod flow Qs is ejected in the state where the ejection pressure is increased to impinge on the impingement surface, whereby all the droplet is atomized and scattered outside. By impinging the high-pressure straight rod flow on the impingement pin in this way, it is possible to spray with an average particle diameter of 10 µm to 50 µm or less.

In addition, since there is no swirling groove, that is present in the hollow conical nozzle that sprays a swirling flow, and it has a straight ejection hole, it is excellent in that it is hard to clog. Further, since the impingement pin is made of ceramic, it is possible to prevent abrasion due to the impingement of the high-pressure straight rod flow.

Fig. 16 shows a seventh embodiment, in which a pin jet one-fluid nozzle 10-PP of another embodiment is employed.

The pin jet one-fluid nozzle 10-PP is formed by insert-molding an ejection-side tip member 86, of which an ejection hole 86h of a straight hole and an impingement pin 86p are integrally formed of ceramic, into a nozzle body 87 made of a fluororesin.

As shown in the drawing, in the ejection-side tip member 86, a U-shaped impingement frame 86b is provided so as to protrude from both sides of an ejection-side wall 86a mounted to an ejection-side opening of the nozzle body 87, and an impingement pin 86p is provided so as to project on a center axis of a horizontal frame portion 86b2 which connects distal ends of vertical frame portions 86b 1 on both sides of the impingement frame 86b. An ejection hole 86h is provided at a center of the ejection-side wall 86a, and the ejection hole 86h and the impingement pin 86p are set in the same relationship as the nozzle 10-P of the sixth embodiment.

The nozzle body 87 of which the ejection-side opening is closed by the tip member 86 is provided with a straight flow path 87b surrounded by a cylindrical outer peripheral wall 87a and the ejection-side wall 86a, and the straight flow path 87b is connected to the ejection hole 86h. Locking pieces 87k projecting from an outer surface of the outer peripheral wall 87a of the nozzle body 87 are provided at 90° intervals so as to be capable of connecting to the branch pipe of the joint pipe by one-touch operation, similarly to the nozzle shown in Fig. 15, and can be connected to the insertion holes of the branch pipe, that is provided at 90° intervals, by simply rotating. The strainer 17 is attached to the nozzle body 87 in the same manner as in the above embodiment.

The nozzle of the seventh embodiment is used in the same manner as the nozzle of the sixth embodiment, and a straight rod flow is ejected from the narrow ejection hole 86h and impinges on the impingement surface at the tip of the impingement pin 86p at the opposing position, whereby all the droplet is atomized and scattered outside. By impinging the high-pressure straight rod flow on the impingement pin in this way, it is possible to spray with an average particle diameter of 10 µm to 50 µm or less.

The present invention is not limited to the above-described embodiments, and can be variously modified in the range without departing from the scope of the present invention as defined by the claims.

### REFERENCE SIGNS LIST

- 1: cultivation box
- 2: upper panel
2a inclined side wall
2b top surface
- 3: lower panel
3a inclined side wall
3b bottom wall
- 4: hollow rhizosphere portion
- 5: gutter
- 6: planting hole
- 7: nozzle-mounting hole
- 8: waste liquid port
- 10 (10A, 10B, 10-P, 10-PP): nozzle
- 13: main nutrient solution supply pipe
- 14: nutrient solution supply pipe
- 16: pot
- 80: CO₂ tank
- 85: intermediate panel
- P: cultivation plant
- Pr: root

## Claims

1. A plant cultivation apparatus comprising a cultivation box (1) which has a hollow rhizosphere portion (4) for hanging a root of a cultivation plant and in which nutrient solution is sprayed in a mist state in the rhizosphere portion (4), wherein:
the cultivation box (1) is constructed by detachably combining an upper panel (2) and a lower panel (3);
a bottom wall (3b) of the lower panel (3) is provided with a waste liquid port (8);
the upper panel (2) is provided with nozzle-mounting holes (7) at intervals in the length direction;
a nozzle (10) for spraying nutrient solution is inserted into each of the nozzle-mounting holes (7) and hung in the rhizosphere portion (4);
the upper panel (2) is provided with planting holes (6) for the cultivation plant; and
a root of the cultivation plant is inserted into the planting hole (6) and hung in the rhizosphere portion (4), to which the nutrient solution is sprayed from the nozzle (10);
**characterized in that**:
a trough-shaped gutter (5) is detachably installed below the bottom wall (3b) of the lower panel (3) over an entire length in a length direction.

2. The plant cultivation apparatus according to claim 1, wherein:
the lower panel (3) has inclined side walls (3a) on both sides in a width direction, that are formed inclined in an upward spreading direction;
the upper panel (2) has inclined side walls (2a) on both sides in the width direction, that are formed inclined in a downward spreading direction;
the cultivation box (1) is formed into any one of shapes of wide, narrow, shallow and deep by changing a width or height of the lower panel (3) and the upper panel (2);
the nozzle-mounting hole (7) is provided on a top surface (2b) between the inclined side walls (2a) on both sides of the upper panel (2); and
the planting holes (6) are provided on the inclined side wall (2a) in a staggered arrangement.

3. The plant cultivation apparatus according to claim 1, wherein:
the lower panel (3) and the upper panel (2) respectively have vertical side walls on both sides in a width direction;
a top surface (2b) of the upper panel (2) and a bottom surface of the lower panel (3) are horizontal;
the cultivation box (1) is formed into any one of shapes of wide, narrow, shallow and deep by changing a width or height of the lower panel (3) and the upper panel (2);
the one nozzle-mounting hole (7) is provided on the top surface (2b) of the narrow upper panel (2), or the plurality of nozzle-mounting holes (7) are provided at intervals on the top surface (2b) of the wide upper panel (2); and
the planting holes (6) are provided at positions sandwiching the nozzle-mounting hole (7).

4. The plant cultivation apparatus according to any one of claims 1 to 3, wherein:
a receiving plate portion (3c) is provided so as to protrude outward from an upper end of each side wall in a width direction of the lower panel (3), and a fitting portion (3d) is provided on the receiving plate portion (3c);
a mounting portion (2c) is provided so as to protrude outward from a lower end of each side wall in the width direction of the upper panel (2), and a fitted portion (2d) is provided on the mounting portion (2c); and
the mounting portion (2c) of the upper panel (2) is put on the receiving plate portion (3c) of the lower panel (3) to fit the fitting portion (3d) to the fitted portion (2d), or an intermediate panel (85) for increasing volume of the rhizosphere portion (4) is interposed between the side walls of the upper panel (2) and the lower panel (3) on both sides wherein connection plate portions protruding outward at an upper end and a lower end of the intermediate panel (85) are respectively abutted and connected with the mounting portion (2c) and the receiving plate portion (3c).

5. The plant cultivation apparatus according to any one of claims 1 to 4, wherein:
a nutrient solution supply pipe (14) is inserted into the nozzle-mounting hole (7) of the upper panel (2) and hung in the rhizosphere portion (4);
a pipe (60) that branches on both sides in the length direction is provided at a lower end of the nutrient solution supply pipe (14);
the nozzle (10) for spraying forward and the nozzle (10) for spraying rearward are provided at both front and rear ends of the branch pipe (60);
the nozzles (10) are disposed between the plurality of cultivation plants arranged side by side in the length direction;
the nutrient solution supply pipes (14) are connected to a main nutrient solution supply pipe (13) at intervals in the length direction; and
the main nutrient solution supply pipe (13) is installed and piped on an upper side of the upper panel (2).

6. The plant cultivation apparatus according to any one of claims 1 to 5, wherein
a hollow conical nozzle which sprays a swirling flow or a pin jet nozzle which sprays by impinging a straight rod flow on a pin is used as the nozzle (10) for spraying the nutrient solution.

7. The plant cultivation apparatus according to any one of claims 1 to 6, further comprising
a generator that operates in a power failure or a battery that is supplied with power from a solar power generation panel for charging.

8. The plant cultivation apparatus according to any one of claims 1 to 7, further comprising
a CO₂ supply device that supplies CO₂ to the rhizosphere portion (4).

9. The plant cultivation apparatus according to claim 8, further comprising
a controller that automatically controls at least one of a CO₂ concentration in the rhizosphere portion (4) and a spray cycle of the nutrient solution, depending on a growth stage of the plant and an amount of solar radiation.

10. The plant cultivation apparatus according to any one of claims 1 to 9, further comprising
an abnormality notification device that raises an alarm in detecting any one of: power failure and abnormal occurrence of an electric component provided on a nutrient solution supply means to the nozzle (10); abnormal water level occurrence in a fertilizer tank (42) storing the nutrient solution; disconnection occurrence of a CO₂ sensor installed on the rhizosphere portion (4); and disconnection occurrence of a solar radiation sensor.

11. The plant cultivation apparatus according to any one of claims 1 to 10, further comprising:
a clarifying device (56) that sterilizes a waste liquid collected through the waste liquid port (8) by using UV, ozone or a photocatalyst;
an automatic cleaning filter device (62) that filtrates a purified waste liquid; and
a pipe returning from the automatic cleaning filter device (56) to a fertilizer tank (42).

12. The plant cultivation apparatus according to any one of claims 1 to 11, further comprising
a chiller device (48) that prevents overheating of a nutrient solution stored in a fertilizer tank (42).

## Patentansprüche

1. Pflanzenzuchtvorrichtung, die einen Zuchtkasten (1) aufweist, der einen hohlen Rhizosphärenabschnitt (4) zum Aufhängen einer Wurzel einer Zuchtpflanze aufweist und in dem eine Nährlösung in einem Nebelzustand in den Rhizosphärenabschnitt (4) gesprüht wird, wobei:
der Zuchtkasten (1) durch lösbares Kombinieren einer oberen Platte (2) und einer unteren Platte (3) aufgebaut ist;
eine untere Wand (3b) der unteren Platte (3) mit einer Abfallflüssigkeitsöffnung (8) versehen ist;
die obere Platte (2) mit Düsenbefestigungslöchern (7) in Intervallen in Längsrichtung versehen ist;
eine Düse (10) zum Sprühen von Nährlösung in jedes der Düsenbefestigungslöcher (7) eingesetzt und in den Rhizosphärenabschnitt (4) gehängt ist;
die obere Platte (2) mit Pflanzlöchern (6) für die Zuchtpflanze versehen ist; und
eine Wurzel der Zuchtpflanze in das Pflanzloch (6) eingeführt und in den Rhizosphärenabschnitt (4) gehängt ist, auf die die Nährlösung aus der Düse (10) gesprüht wird;
**dadurch gekennzeichnet, dass**:
eine wannenförmige Rinne (5) unter der unteren Wand (3b) der unteren Platte (3) über eine gesamte Länge in einer Längsrichtung abnehmbar angebracht ist.

2. Pflanzenzuchtvorrichtung nach Anspruch 1, wobei:
die untere Platte (3) auf beiden Seiten in einer Breitenrichtung geneigte Seitenwände (3a) aufweist, die in einer Aufwärtsausbreitungsrichtung geneigt ausgebildet sind;
die obere Platte (2) auf beiden Seiten in der Breitenrichtung geneigte Seitenwände (2a) aufweist, die in einer Abwärtsausbreitungsrichtung geneigt ausgebildet sind;
der Zuchtkasten (1) durch Ändern der Breite oder Höhe der unteren Platte (3) und der oberen Platte (2) in eine der Formen breit, schmal, flach und tief ausgebildet ist;
das Düsenbefestigungsloch (7) auf einer oberen Fläche (2b) zwischen den geneigten Seitenwänden (2a) auf beiden Seiten der oberen Platte (2) vorgesehen ist; und
die Pflanzlöcher (6) an der geneigten Seitenwand (2a) in einer versetzten Anordnung vorgesehen sind.

3. Pflanzenzuchtvorrichtung nach Anspruch 1, wobei:
die untere Platte (3) und die obere Platte (2) jeweils vertikale Seitenwände auf beiden Seiten in einer Breitenrichtung aufweisen;
eine obere Fläche (2b) der oberen Platte (2) und eine untere Fläche der unteren Platte (3) horizontal sind;
der Zuchtkasten (1) durch Ändern einer Breite oder Höhe der unteren Platte (3) und der oberen Platte (2) in eine der Formen breit, schmal, flach und tief ausgebildet ist;
das eine Düsenbefestigungsloch (7) auf der oberen Oberfläche (2b) der schmalen oberen Platte (2) vorgesehen ist oder die mehreren Düsenbefestigungslöcher (7) in Intervallen auf der oberen Oberfläche (2b) der breiten oberen Platte (2) vorgesehen sind; und
die Pflanzlöcher (6) an Positionen vorgesehen sind, die das Düsenbefestigungsloch (7) sandwichartig umgeben.

4. Pflanzenzuchtvorrichtung nach einem der Ansprüche 1 bis 3, wobei:
ein Aufnahmeplattenabschnitt (3c) so vorgesehen ist, dass er von einem oberen Ende jeder Seitenwand in einer Breitenrichtung der unteren Platte (3) nach außen vorsteht, und ein Einpassungsabschnitt (3d) am Aufnahmeplattenabschnitt (3c) vorgesehen ist;
ein Befestigungsabschnitt (2c) so vorgesehen ist, dass er von einem unteren Ende jeder Seitenwand in der Breitenrichtung der oberen Platte (2) nach außen vorsteht, und ein eingepasster Abschnitt (2d) am Befestigungsabschnitt (2c) vorgesehen ist; und
der Befestigungsabschnitt (2c) der oberen Platte (2) auf den Aufnahmeplattenabschnitt (3c) der unteren Platte (3) gesetzt wird, um den Einpassungsabschnitt (3d) in den eingepassten Abschnitt (2d) einzupassen, oder eine Zwischenplatte (85) zur Vergrößerung des Volumens des Rhizosphärenabschnitts (4) zwischen den Seitenwänden der oberen Platte (2) und der unteren Platte (3) auf beiden Seiten eingefügt ist, wobei Verbindungsplattenabschnitte, die an einem oberen Ende und einem unteren Ende der Zwischenplatte (85) nach außen vorstehen, jeweils an den Befestigungsabschnitt (2c) und den Aufnahmeplattenabschnitt (3c) anliegen und mit diesen verbunden sind.

5. Pflanzenzuchtvorrichtung nach einem der Ansprüche 1 bis 4, wobei:
eine Nährlösungszufuhrleitung (14) in das Düsenbefestigungsloch (7) der oberen Platte (2) eingeführt und in den Rhizosphärenabschnitt (4) gehängt ist;
eine Leitung (60), die sich auf beiden Seiten in Längsrichtung verzweigt, an einem unteren Ende der Nährlösungszufuhrleitung (14) vorgesehen ist;
die Düse (10) zum Sprühen nach vorne und die Düse (10) zum Sprühen nach hinten sowohl am vorderen als auch am hinteren Ende der Verzweigungsleitung (60) vorgesehen sind;
die Düsen (10) zwischen den mehreren in Längsrichtung nebeneinander angeordneten Zuchtpflanzen angeordnet sind;
die Nährlösungszufuhrleitungen (14) in Intervallen in der Längsrichtung mit einer Hauptnährlösungszufuhrleitung (13) verbunden sind; und
die Hauptnährlösungszufuhrleitung (13) an einer Oberseite der oberen Platte (2) installiert und verrohrt ist.

6. Pflanzenzuchtvorrichtung nach einem der Ansprüche 1 bis 5, wobei eine hohle konische Düse, die einen Wirbelstrom versprüht, oder eine Stiftstrahldüse, die durch Auftreffen eines geraden Stabstroms auf einen Stift sprüht, als Düse (10) zum Versprühen der Nährlösung verwendet wird.

7. Pflanzenzuchtvorrichtung nach einem der Ansprüche 1 bis 6, die ferner aufweist:
einen Generator, der bei einem Stromausfall arbeitet, oder eine Batterie, die zum Aufladen mit Strom von einer Solaranlage versorgt wird.

8. Pflanzenzuchtvorrichtung nach einem der Ansprüche 1 bis 7, die ferner aufweist:
eine CO₂-Zufuhrvorrichtung, die dem Rhizosphärenabschnitt (4) CO₂ zuführt.

9. Pflanzenzuchtvorrichtung nach Anspruch 8, die ferner aufweist:
eine Steuerung, die automatisch eine CO₂-Konzentration im Rhizosphärenabschnitt (4) und/oder einen Sprühzyklus der Nährlösung in Abhängigkeit von einem Wachstumsstadium der Pflanze und einer Menge an Sonneneinstrahlung steuert.

10. Pflanzenzuchtvorrichtung nach einem der Ansprüche 1 bis 9, die ferner aufweist:
eine Anomalie-Benachrichtigungsvorrichtung, die einen Alarm auslöst, wenn sie eines erfasst von: einen Stromausfall und ein anormales Auftreten einer elektrischen Komponente, die an einer Nährlösungszufuhreinrichtung zur Düse (10) vorgesehen ist;
einen anormalen Wasserstand in einem Düngemitteltank (42), der die Nährlösung speichert; ein Auftreten einer Unterbrechung eines CO₂-Sensors, der am Rhizosphärenabschnitt (4) installiert ist; und ein Auftreten einer Unterbrechung eines Sonnenstrahlungssensors.

11. Pflanzenzuchtvorrichtung nach einem der Ansprüche 1 bis 10, die ferner aufweist:
eine Klärvorrichtung (56), die eine durch die Abfallflüssigkeitsöffnung (8) gesammelte Abfallflüssigkeit unter Verwendung von UV, Ozon oder einem Photokatalysator sterilisiert;
eine automatische Reinigungsfiltervorrichtung (62), die eine gereinigte Abfallflüssigkeit filtert; und
eine Leitung, die von der automatischen Reinigungsfiltervorrichtung (62) zu einem Düngemitteltank (42) zurückführt.

12. Pflanzenzuchtvorrichtung nach einem der Ansprüche 1 bis 11, das ferner aufweist:
eine Kühlvorrichtung (48), die eine Überhitzung einer in einem Düngemitteltank (42) gelagerten Nährstofflösung verhindert.

## Revendications

1. Appareil de culture de plantes, comprenant une boîte de culture (1) ayant une partie rhizosphérique creuse (4) pour la suspension d'une racine d'une plante de culture et où une solution nutritive est pulvérisée à un état de brumisation dans la partie rhizosphérique (4), où :
la boîte de culture (1) est constituée par combinaison amovible d'un panneau supérieur (2) et d'un panneau inférieur (3) ;
une paroi de fond (3b) du panneau inférieur (3) est prévue avec un orifice d'évacuation de déchets liquides (8) ;
le panneau supérieur (2) est prévu avec des trous de montage de buse (7) espacés dans le sens de la longueur ;
une buse (10) de pulvérisation de solution nutritive est insérée dans chacun des trous de montage de buse (7) et suspendue dans la partie rhizosphérique (4) ;
le panneau supérieur (2) est prévu avec des trous de plantation (6) pour la plante de culture ; et
une racine de la plante de culture est insérée dans le trou de plantation (6) et suspendue dans la partie rhizosphérique (4), vers laquelle la solution nutritive est pulvérisée par la buse (10) ;
**caractérisé :**
**en ce qu'**une gouttière en forme d'auge (5) est installée de manière amovible en dessous de la paroi de fond (3b) du panneau inférieur (3) sur toute la longueur dans le sens de la longueur.

2. Appareil de culture de plantes selon la revendication 1, où :
le panneau inférieur (3) a des parois latérales inclinées (3a) de part et d'autre dans le sens de la largeur, formées avec inclinaison dans une direction d'écartement vers le haut ;
le panneau supérieur (2) a des parois latérales inclinées (2a) de part et d'autre dans le sens de la largeur, formées avec inclinaison dans une direction d'écartement vers le bas ;
la boîte de culture (1) présente de manière quelconque une forme large, étroite, peu profonde ou profonde par variation de la largeur ou de la hauteur du panneau inférieur (3) et du panneau supérieur (2) ;
le trou de montage de buse (7) est prévu sur une surface supérieure (2b) entre les parois latérales inclinées (2a) de part et d'autre du panneau supérieur (2) ; et
les trous de plantation (6) sont prévus sur la paroi latérale inclinée (2a) avec un agencement en quinconce.

3. Appareil de culture de plantes selon la revendication 1, où :
le panneau inférieur (3) et le panneau supérieur (2) ont des parois latérales verticales respectives de part et d'autre dans le sens de la largeur ;
une surface supérieure (2b) du panneau supérieur (2) et une surface de fond du panneau inférieur (3) sont horizontales ;
la boîte de culture (1) présente de manière quelconque une forme large, étroite, peu profonde ou profonde par variation de la largeur ou de la hauteur du panneau inférieur (3) et du panneau supérieur (2) ;
le trou de montage de buse (7) est prévu sur la surface supérieure (2b) du panneau supérieur étroit (2), ou la pluralité de trous de montage de buse (7) est prévue de manière espacée sur la surface supérieure (2b) du panneau supérieur large (2) ; et
les trous de plantation (6) sont prévus à des emplacements enserrant le trou de montage de buse (7).

4. Appareil de culture de plantes selon l'une des revendications 1 à 3, où :
une partie de plaque de réception (3c) est prévue de manière à faire saillie vers l'extérieur depuis une extrémité supérieure de chaque paroi latérale dans le sens de la largeur du panneau inférieur (3), et une partie de fixation (3d) est prévue sur la partie de plaque de réception (3c) ;
une partie de montage (2c) est prévue de manière à faire saillie vers l'extérieur depuis une extrémité inférieure de chaque paroi latérale dans le sens de la largeur du panneau supérieur (2), et une partie d'emboîtement (2d) est prévue sur la partie de montage (2c) ; et
la partie de montage (2c) du panneau supérieur (2) est mise en place sur la partie de plaque de réception (3c) du panneau inférieur (3) pour ajuster la partie de fixation (3d) avec la partie d'emboîtement (2d), ou un panneau intermédiaire (85) destiné à augmenter le volume de la partie rhizosphérique (4) est intercalé sur les deux côtés entre les parois latérales du panneau supérieur (2) et du panneau inférieur (3), des parties de plaque de connexion en saillie vers l'extérieur à une extrémité supérieure et une extrémité inférieure du panneau intermédiaire (85) venant respectivement en butée contre la partie de montage (2c) et la partie de plaque de réception (3c) et étant raccordées à celles-ci.

5. Appareil de culture de plantes selon l'une des revendications 1 à 4, où :
une conduite d'alimentation en solution nutritive (14) est insérée dans le trou de montage de buse (7) du panneau supérieur (2) et suspendue dans la partie rhizosphérique (4) ;
une conduite (60) partant de part et d'autre dans le sens de la longueur est prévue à une extrémité inférieure de la conduite d'alimentation en solution nutritive (14) ;
la buse (10) de pulvérisation vers l'avant et la buse (10) de pulvérisation vers l'arrière sont prévues à l'extrémité avant et à l'extrémité arrière de la conduite ramifiée (60) ;
les buses (10) sont disposées entre les plusieurs plantes de culture et juxtaposées dans le sens de la longueur ;
les conduites d'alimentation en solution nutritive (14) sont reliées à une conduite d'alimentation principale en solution nutritive (13) en étant espacées dans le sens de la longueur ; et
la conduite d'alimentation principale en solution nutritive (13) est installée et s'étend sur un côté supérieur du panneau supérieur (2).

6. Appareil de culture de plantes selon l'une des revendications 1 à 5, où une buse conique creuse pulvérisant un flux tourbillonnant ou une buse de projection pulvérisant un flux rectiligne incident sur une aiguille sont utilisées en tant que buse (10) pour pulvériser la solution nutritive.

7. Appareil de culture de plantes selon l'une des revendications 1 à 6, comprenant en outre un générateur fonctionnant en cas de panne de courant ou une batterie alimentée par l'énergie d'une panneau photovoltaïque pour la charge.

8. Appareil de culture de plantes selon l'une des revendications 1 à 7, comprenant en outre un dispositif d'alimentation en CO₂ refoulant du CO₂ vers la partie rhizosphérique (4).

9. Appareil de culture de plantes selon la revendication 8, comprenant en outre un dispositif de commande commandant automatiquement un concentration de CO₂ dans la partie rhizosphérique (4) et/ou un cycle de pulvérisation de la solution nutritive, en fonction d'une phase de croissance de la plante et d'une intensité de rayonnement solaire.

10. Appareil de culture de plantes selon l'une des revendications 1 à 9, comprenant en outre un dispositif de notification d'anomalie déclenchant une alarme par détection : soit d'une panne de courant et d'une anomalie d'un composant électrique prévu sur un moyen d'alimentation en solution nutritive de la buse (10) ; soit d'un niveau d'eau anormal dans un réservoir d'engrais (42) stockant la solution nutritive ; soit d'une déconnexion d'un capteur de CO₂ installé sur la partie rhizosphérique (4) ; soit d'une déconnexion d'un capteur de rayonnement solaire.

11. Appareil de culture de plantes selon l'une des revendications 1 à 10, comprenant en outre :
un dispositif d'épuration (56) stérilisant des déchets liquides collectés par l'orifice d'évacuation de déchets liquides (8) au moyen d'UV, d'ozone ou d'un photocatalyseur ;
un dispositif de filtre auto-nettoyant (62) filtrant des déchets liquides épurés ; et
une conduite de retour du dispositif de filtre auto-nettoyant (62) vers un réservoir d'engrais (42).

12. Appareil de culture de plantes selon l'une des revendications 1 à 11, comprenant en outre un dispositif de réfrigération (48) empêchant une surchauffe d'une solution nutritive stockée dans un réservoir d'engrais (42).
